# EUROPÄISCHE PATENTSCHRIFT

(11) **EP 2 411 721 B1**
(45) Veröffentlichungstag und Bekanntmachung des Hinweises auf die Patenterteilung: **08.05.2013**
(21) Anmeldenummer: 10709496.3
(22) Anmeldetag: 16.03.2010
(51) Int. Cl.: F16L 47/26, F16L 47/32

(54) **FITTING ZUR HERSTELLUNG EINER ROHRVERBINDUNG**
FITTING FOR PRODUCING A PIPE UNION
RACCORD POUR LA PRODUCTION D'UNE JONCTION À TUBES

(30) Priorität: 26.03.2009 CH 476092009
(43) Veröffentlichungstag der Anmeldung: 01.02.2012
(73) Patentinhaber: Georg Fischer JRG AG, 4450 Sissach (CH)
(72) Erfinder: BÜRLI, Stephan, CH-4466 Ormalingen (CH)
(74) Vertreter: De Colle, Piergiacomo
(86) Internationale Anmeldenummer: PCT/EP2010/053372
(87) Internationale Veröffentlichungsnummer: WO 2010/108820

(56) Entgegenhaltungen:
- EP-A1- 1 243 841
- US-A- 5 551 733

## Beschreibung

### Anwendungsgebiet der Erfindung

Die Erfindung bezieht sich auf einen Fitting zur Herstellung einer Rohrverbindung, insbesondere für Verbundrohre, wo ein Rohrende dichtend an einen Fitting angeschlossen ist. Die Fittings weisen die Gestalt von T-Stücken oder Winkelstücken verschiedener Abwinkelungen auf. Neben Verbundrohren kommen auch Rohre aus metallischen Legierungen oder Kunststoff in Betracht. In einer bevorzugten Ausführungsform sollen die Fittings auch zum Anschluss mit einem aufgeweiteten Rohrende geeignet sein und sich mittels einer Überwurfmutter verschrauben lassen. Das vorrangig durchströmende Medium ist Wasser in Wasserversorgungs-oder Heizungsnetzen.

### Stand der Technik

Gegenstand der EP 1 022 504 B1 ist eine verschraubbare Rohrverbindung, bei der ein aufgeweitetes Rohrende mittels einer Überwurfmutter dichtend gegen einen Fitting verschraubt ist. Der Fitting besteht aus einem mediumführenden Innenteil mit einer Anschlusspartie und einem Aussenteil mit einem Aussengewindeabschnitt. Das Innenteil wird bis auf die Anschlusspartie vollständig vom Aussenteil mit dem Aussengewindeabschnitt ummantelt. An der Anschlusspartie des Fittings ist ein Anschlussabschnitt eines Rohres anschliessbar, wobei eine Überwurfmutter den Anschlussabschnitt hintergreift und zur Verschraubung mit dem Aussengewindeabschnitt am Aussenteil vorgesehen ist. Das Aussenteil und das Innenteil bestehen aus verschiedenen Kunststoffen, dabei ist das Aussenteil auf das Innenteil im Zweikomponenten-Spritzverfahren aufgegossen, wodurch beide Teile eine Einheit bilden.

Eine ähnliche Rohrverbindung ist in der EP 1 243 841 B1 beschrieben, wobei der Fitting mindestens ein erstes Ansatzstück und ein zweites Ansatzstück mit jeweils einer Längsachse hat, welche zueinander in einem Winkel angeordnet sind. Die Innenwandungen der Ansatzstücke haben einen kreisförmigen Querschnitt. Im Schnittpunkt der Längsachsen ist ein Mündungszentrum definiert. Im Bereich der aufeinandertreffenden Ansatzstücke entsteht an der Innenwandung über einen Teil des Umfangs eine von der Kreisform abweichende Kontur, wodurch die Druckverhältnisse nachteilig gestört werden und Spannungen auftreten. An der Aussenwandung verlaufen entlang dem Mündungsbereich jeweils Rippen, so dass vom Mündungszentrum aus betrachtet die Aussenkontur des Fittings zumindest dort, wo die entsprechenden Innenwandungen der Ansatzstücke ineinander münden, kreisförmig ausgebildet ist. Die Rippen bewirken eine Verstärkung am jeweiligen Mündungsbereich und stützen die dort auftretenden Spannungen ab. Auf dem Fitting ist ein Rohrstück mit einem aufgeweiteten Rohrende mittels einer Überwurfmutter dichtend verschraubt. Der Fitting ist als Zweischicht-Spritzgiessteil hergestellt.

### Aufgabe der Erfindung

Ausgehend vom oben charakterisierten Stand der Technik liegt der Erfindung die Aufgabe zugrunde, einen verbesserten Fitting vorzuschlagen, an den sich das Ende eines Rohrstücks dichtend anschliessen lässt, um damit eine Rohrverbindung herzustellen. Hierbei kommt es darauf an, den Fitting so zu konstruieren, dass sich dieser kosteneffizienter in Serie herstellen lässt und dabei alle Anforderungen hinsichtlich Druckfestigkeit, Dichtheit und langer Standfestigkeit erfüllt sowie eine servicefreundliche Montage erlaubt.

Eine weitere Aufgabe ist, eine herstellungstechnisch vorteilhafte Alternative zum bisherigen Zweischicht-Aufbau der Fittings vorzuschlagen.

Eine nächste Aufgabe liegt darin, den Fitting für eine Schraubverbindung zu gestalten und das dazu am Fitting notwendige Gewinde auf effiziente Weise herstellen zu können.

Schliesslich steht die Aufgabe, die Schraubverbindung zwischen dem Fitting und einer Überwurfmutter gegen unbeabsichtigtes Lösen, z.B. infolge von Vibrationen, zu sichern.

### Übersicht über die Erfindung

Das T-Stück als Fitting zur Herstellung einer Rohrverbindung besitzt eine Wandung sowie ein Mittelteil, von dem sich drei Stutzen erstrecken. Jeder Stutzen ist mit einer Anschlusskontur zur Aufnahme eines Endes eines Rohrstücks versehen. Die Stutzen besitzen jeweils einen zumindest im Prinzip im Querschnitt kreisrunden Strömungsdurchgang, der mit seiner Querschnittsfläche in den sich im Mittelteil fortsetzenden Strömungsdurchgang mündet. Innerlich des T-Stücks entstehen an der Mündung des Strömungsdurchgangs des mittleren dritten Stutzens in den Strömungsdurchgang des Mittelteils zwei Wandungskanten in Form von zur Vertikalen geneigten Wurfparabeln, die trichterförmig mit ihren auslaufenden Ästen an zwei einander gegenüberliegenden Fluchtpunkten an der Wandung des Mittelteils zusammenkommen. Zur Verstärkung der am T-Stück Schwachstellen bildenden Wandungskanten ist gegen die im Betrieb auf das Mittelteil wirkende Druckbelastung beidseits am T-Stück jeweils eine äussere Verrippung vorgesehen, welche besteht aus:
- jeweils einem zu jedem Fluchtpunkt kongruent positionierten Zentrum;
- jeweils einer ersten Rippe, die sich von jedem Zentrum vom dritten Stutzen abwendend erstreckt und deren Enden aufeinander zugerichtet sind;
- jeweils ein Paar zweiter Rippen, die sich von jedem Zentrum V-förmig zum dritten Stutzen gerichtet erstrecken, wobei die Enden der zueinander komplementären zweiten Rippen beider Paare aufeinander zugerichtet sind.
Die Enden der zueinander komplementären zweiten Rippen beider Paare sind durch eine kongruent zur jeweiligen Wandungskante verlaufende erste Überbrückung miteinander verbunden.

Die nachfolgenden Merkmale beziehen sich auf spezielle Ausführungen des T-Stücks: Die Enden jedes Paares zweiter Rippen sind durch eine zweite Überbrückung miteinander verbunden, wodurch die beiden ersten Überbrückungen und die beiden zweiten Überbrückungen den Abgang des dritten Stutzens vom Mittelteil zirkulär geschlossen umlaufen.

Die zweite Überbrückung besteht aus zwei parallel beabstandet zueinander verlaufenden Stegen mit einem dazwischenliegenden Freiraum, der sich bis auf die Oberfläche des dritten Stutzens erstreckt. Der dem Mittelteil zugewandte Steg der zweiten Überbrückung erhebt sich von der Oberfläche des dritten Stutzens höher als der dem dritten Stutzen zugewandte Steg.

Das Winkelstück als Fitting zur Herstellung einer Rohrverbindung besitzt eine Wandung sowie ein Mittelteil, von dem sich zwei Stutzen erstrecken, die einen Innenwinkel < 180° einschliessen, dem ein Aussenwinkel > 180° gegenüberliegt. Jeder Stutzen ist mit einer Anschlusskontur zur Aufnahme eines Endes eines Rohrstücks versehen. Die Stutzen besitzen jeweils einen zumindest im Prinzip im Querschnitt kreisrunden Strömungsdurchgang, der mit seiner Querschnittsfläche in den sich im Mittelteil fortsetzenden Strömungsdurchgang mündet. Innerlich des Winkelstücks entsteht an der Einmündung des sich vom ersten Stutzen erstreckenden Strömungsdurchgangs in den sich vom zweiten Stutzen erstreckenden Strömungsdurchgang eine Wandungskante in Form einer zur Vertikalen geneigten Wurfparabel, die mit ihren auslaufenden Ästen an zwei einander gegenüberliegenden Fluchtpunkten an der Wandung des Mittelteils ansetzt. Zur Verstärkung der am Winkelstück Schwachstellen bildenden Wandungskante gegen die im Betrieb auf das Mittelteil wirkende Druckbelastung ist beidseits am Winkelstück jeweils eine äussere Verrippung vorgesehen, welche besteht aus:
- jeweils einem zu jedem Fluchtpunkt kongruent positionierten Zentrum;
- jeweils einer ersten Rippe, die sich von jedem Zentrum zum Aussenwinkel gerichtet erstreckt und deren Enden aufeinander zu gerichtet sind;
- jeweils eine zweite Rippe, die sich von jedem Zentrum zum Innenwinkel gerichtet erstreckt, wobei die Enden der zweiten Rippen aufeinander zu gerichtet sind.
Die Enden der zweiten Rippen sind durch eine kongruent zur Wandungskante verlaufende erste Überbrückung miteinander verbunden.

Die nachfolgenden Merkmale beziehen sich auf spezielle Ausführungen des Winkelstücks: Das Winkelstück ist mit einem Innenwinkel von 90° oder 135° ausgebildet.

Bei einem Winkelstück mit einem kleineren Innenwinkel, von z.B. 90°, erhebt sich das Zentrum von der Oberfläche des Mittelteils höher als bei einem Winkelstück mit einem grösseren Innenwinkel, von z.B. 135°.

Die nachfolgenden Merkmale beziehen sich auf spezielle Ausführungen der Fittings in beiden Formen als T-Stück und Winkelstück: Der Fitting ist aus Kunststoff als Einschicht-Spritzgiessteil ausgebildet.

Das Zentrum der Verrippung ist zylinderförmig und umschliesst ein Sackloch, das sich als Freiraum bis auf die Oberfläche des Mittelteils fortsetzt. Die ersten Rippen und zweiten Rippen nehmen mit zunehmender Entfernung vom Zentrum in der Höhe ab und haben jeweils zwei parallel beabstandet zueinander verlaufende Stege mit einem dazwischenliegenden Freiraum, der sich bis auf die Oberfläche des Mittelteils erstreckt. Die ersten Überbrückungen zwischen den zweiten Rippen sind röhrenförmig ausgebildet.

Jeder Stutzen ist mit einem Aussengewinde versehen, das zur Verschraubung mit einem Innengewinde einer Überwurfmutter dient. Das Ende des Rohrstücks ist mit einer Aufweitung versehen. Die Anschlusskontur befindet sich äusserlich am Stutzen.

Jeder Stutzen hat einen Kragen, der an das Mittelteil angrenzt. Am Übergang vom Kragen auf das Mittelteil sind erhabene Nocken systematisch verteilt, die beim Festziehen der Überwurfmutter oder Lösen dieser aus festgezogenem Zustand für das Ansetzen eines Gegenhalteschlüssels nutzbar sind.

Die Anschlusskontur zur Aufnahme der Aufweitung hat eine Ringnut, welche dem Einsetzen einer Dichtung zur Bildung einer Dichtstelle mit der Aufweitung dient.

Am Stutzen ist benachbart zur Anschlusskontur eine Aufnahmekontur vorhanden, die an den jeweils zugehörigen Kragen angrenzt und der Positionierung eines Gewinderings dient. Der Gewindering trägt das zum Innengewinde der Überwurfmutter komplementäre Aussengewinde.

Der Gewindering besteht aus einer ersten Halbschale und einer zweiten Halbschale, die das Aussengewinde hälftig tragen und zum Zusammenfügen bestimmt sind. Die Halbschalen weisen innerlich eine Gegenkontur auf, die mit der Aufnahmekontur am Stutzen passfähig ist. Die Halbschalen sind vorzugsweise aus Kunststoff als Spritzgiessteile ausgebildet.

Die zum verrasteten Zusammenfügen bestimmten Halbschalen sind an ihren Enden mit zueinander komplementären Rastorganen versehen. Die Aufnahmekontur hat an den Stutzen zueinander beabstandete Ringe und die Gegenkontur in den Halbschalen hat dazu formschlüssige Radialnuten. Das einzelne Rastorgan besteht aus einem Nasenelement und einer anschliessenden Vertiefung, die von beiden Halbschalen wechselseitig ineinandergreifen. Zur Rotationssicherung des auf die an den Stutzen aufmontierten Gewinderings sind in der Aufnahmekontur erste Stopperelemente, z.B. Querstege, angebracht, die mit innerhalb der Gegenkontur in den Halbschalen geformten zweiten Stopperelementen, z.B. Quernuten, zusammenwirken.

Die Überwurfmutter gliedert sich in einen den Stutzen zugewendeten Anschlussbereich mit dem darin angeordneten Innengewinde und einen dem Rohrstück zugewendeten Führungsbereich. Dem Innengewinde ist zum freien Ende des Anschlussbereichs vorgelagert eine erste Profilierung angeordnet, vorzugsweise in Gestalt einer umlaufenden, axial orientierten Verzahnung. Die Halbschalen des Gewinderings tragen neben dem jeweils hälftigen Aussengewinde eine jeweils hälftige zweite Profilierung, vorzugsweise in Gestalt einer umlaufenden, axial orientierten Verzahnung, welche als Träger für einen Sicherungsring bestimmt ist. Bei vollständig auf das Aussengewinde des Gewinderings aufgeschraubter Überwurfmutter ist der Sicherungsring zwischen den Profilierungen zur Lösehemmung der Überwurfmutter gefasst.

Der Sicherungsring hat eine Innenkontur, die rastend in die zweite Profilierung am Gewindering eingreift. Der Sicherungsring hat ferner eine Aussenkontur, die rastend in die erste Profilierung an der Überwurfmutter eingreift. Das Lösen der Schraubverbindung zwischen Überwurfmutter und Gewindering erfordert ein grösseres Lösemoment zu generieren als das Anzugsmoment beim Verschrauben.

Die Überwurfmutter ist äusserlich mit einer Schlüsselkontur zum Ansetzen eines Schraubwerkzeugs versehen, die sich vorzugsweise über den Führungsbereich erstreckt. Die Schlüsselkontur besteht z.B. aus um den Führungsbereich systematisch verteilten, axial orientierten Nuten.

### Kurzbeschreibung der beigefügten Zeichnungen

Es zeigen:
- Figur 1: einen Fitting als T-Stück mit daran angesetzten Rohrstücken und aufgeschraubten Überwurfmuttern, in Perspektivansicht von oben;

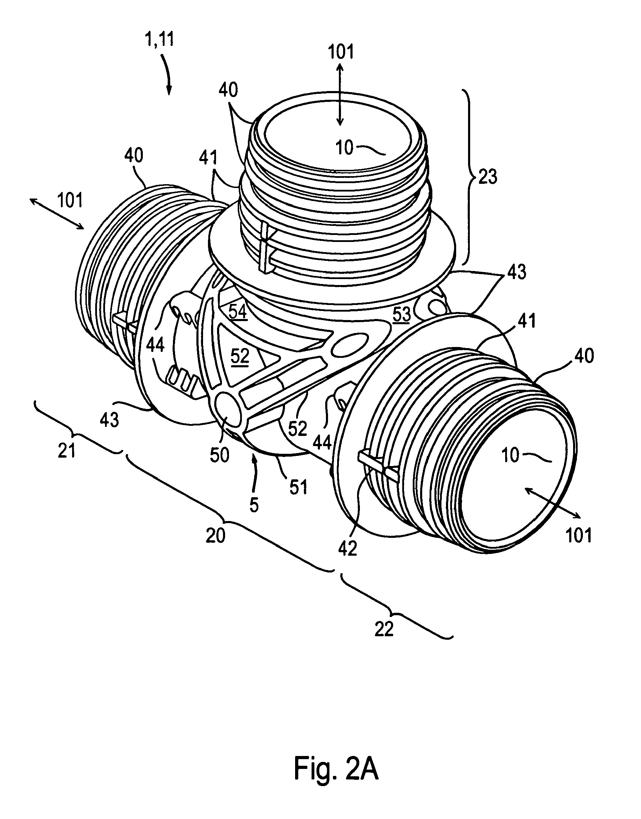

- Figur 2A: den Fitting aus Figur 1 in Alleinstellung, in Perspektivansicht von oben;

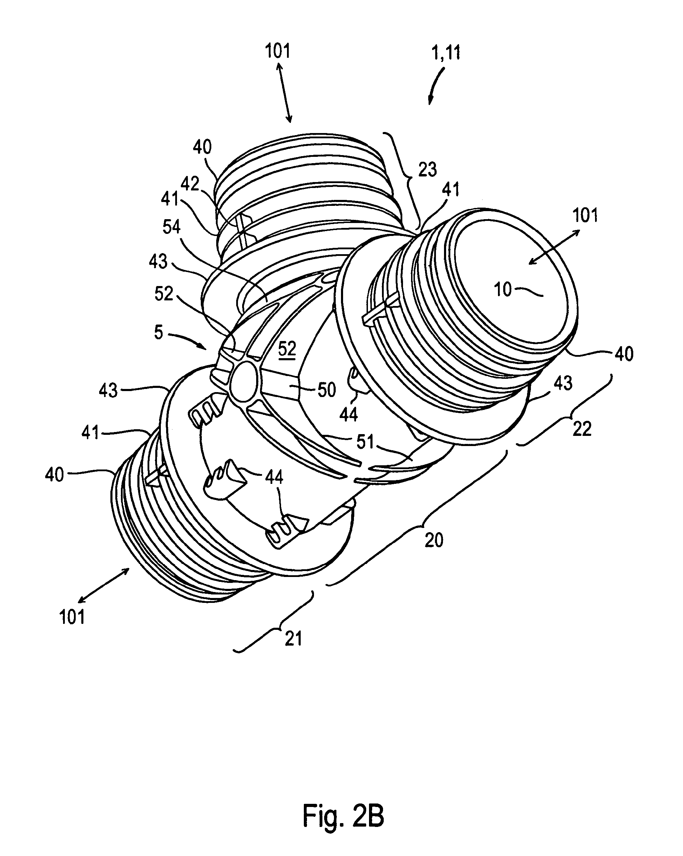

- Figur 2B: den Fitting gemäss Figur 2A, in Perspektivansicht von unten;

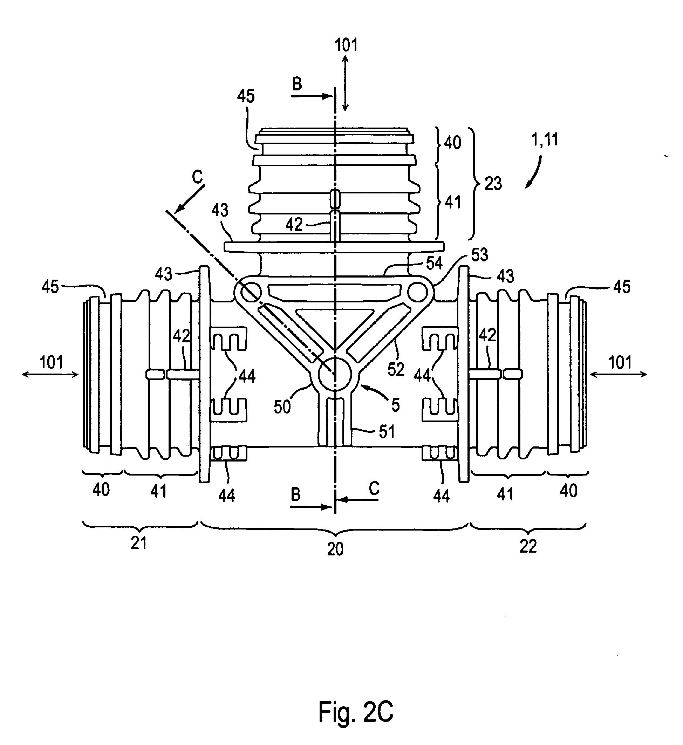

- Figur 2C: den Fitting gemäss Figur 2A, in Vorderansicht;

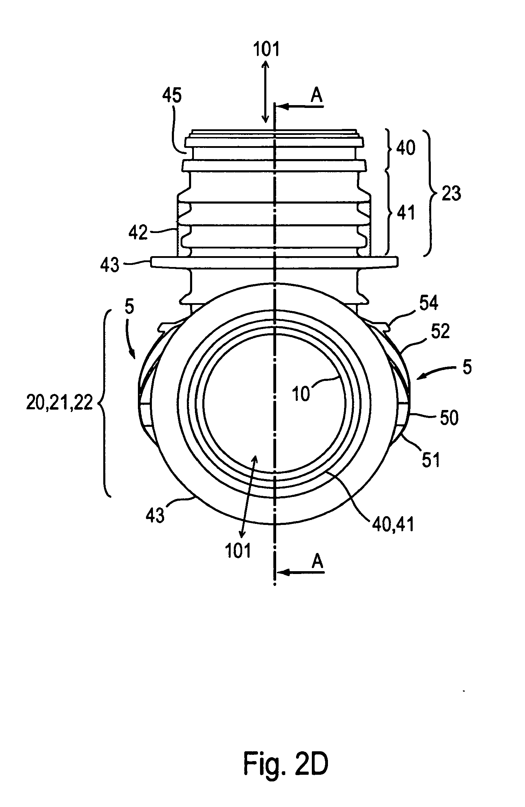

- Figur 2D: den Fitting gemäss Figur 2A, in Seitenansicht;

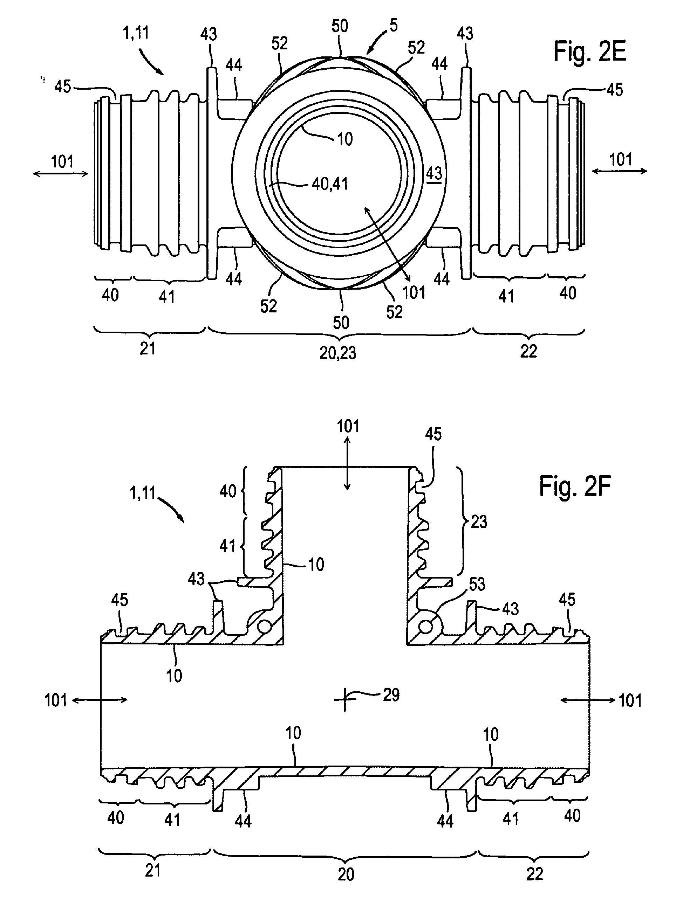

- Figur 2E: den Fitting gemäss Figur 2A, in Draufsicht;
- Figur 2F: den Schnitt entlang der Linie A-A gemäss Figur 2D;

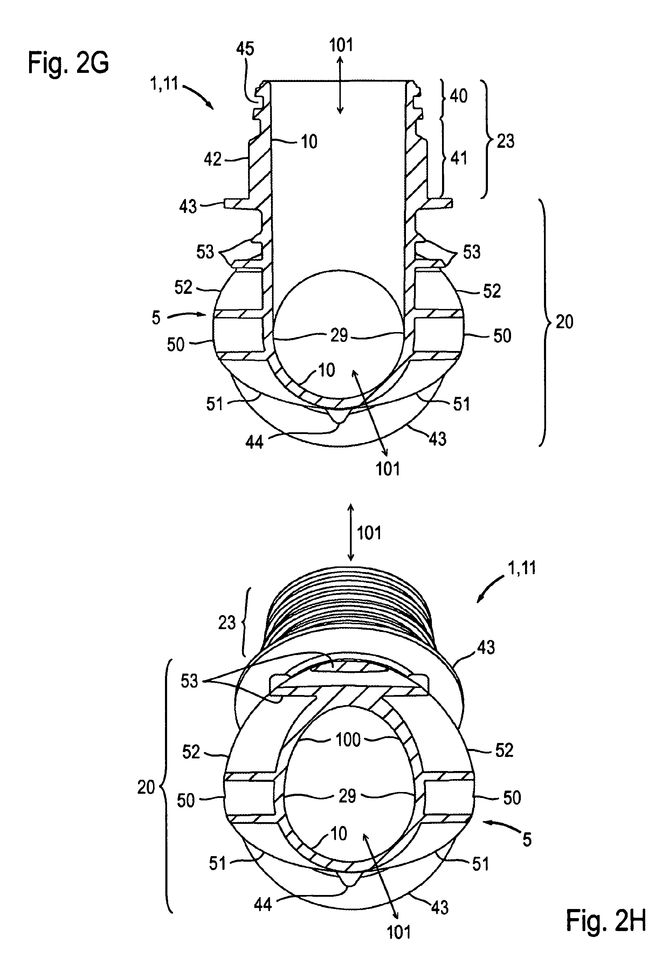

- Figur 2G: den Schnitt entlang der Linie B-B gemäss Figur 2C;
- Figur 2H: den Schnitt entlang der Linie C-C gemäss Figur 2C;
- Figur 3A: einen Fitting als Winkelstück mit einer Abwinkelung im Bereich von 135°, in Perspektivansicht von oben;
- Figur 3B: den Fitting gemäss Figur 3A, in Perspektivansicht von unten;
- Figur 3C: den Fitting gemäss Figur 3A, in Vorderansicht;
- Figur 3D: den Fitting gemäss Figur 3A, in Seitenansicht;
- Figur 3E: den Fitting gemäss Figur 3A, in Draufsicht;
- Figur 3F: den Schnitt entlang der Linie D-D gemäss Figur 3D;
- Figur 3G: den Schnitt entlang der Linie E-E gemäss Figur 3C;
- Figur 4A: einen Fitting als Winkelstück mit einer Abwinkelung im Bereich von 90°, in Perspektivansicht von oben;
- Figur 4B: den Fitting gemäss Figur 4A, in Perspektivansicht von unten;
- Figur 4C: den Fitting gemäss Figur 4A, in Vorderansicht;
- Figur 4D: den Fitting gemäss Figur 4A, in Seitenansicht;
- Figur 4E: den Fitting gemäss Figur 4A, in Draufsicht;
- Figur 4F: den Schnitt entlang der Linie F-F gemäss Figur 4D;
- Figur 4G: den Schnitt entlang der Linie G-G gemäss Figur 4C;
- Figur 5: einen Fitting als Muffe, in Perspektivansicht von oben;

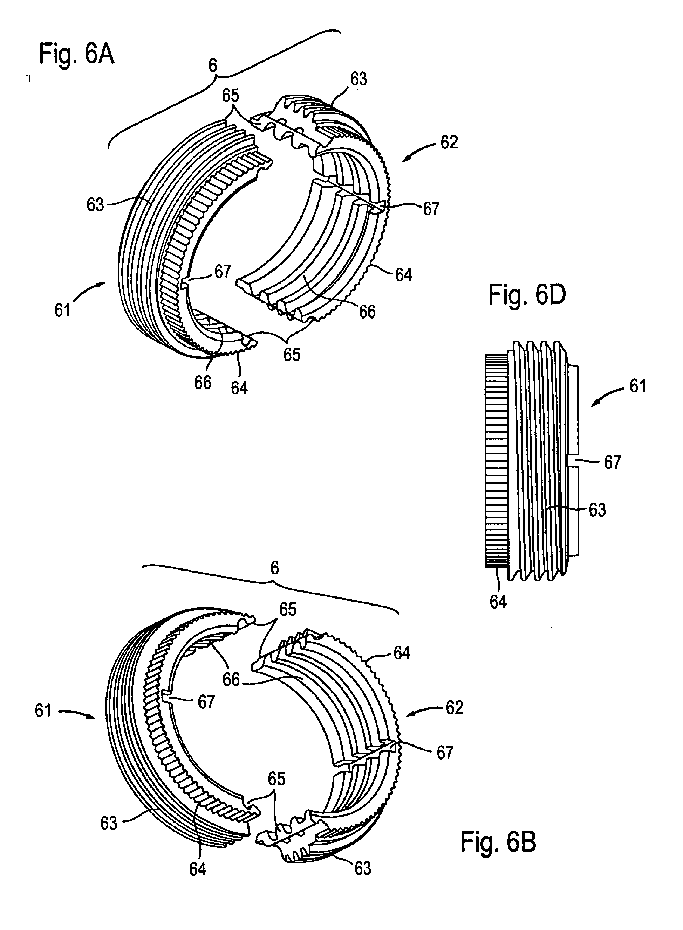

- Figur 6A: einen Gewindering, bestehend aus zwei voneinander gelösten Halbschalen, in Perspektivansicht von oben;
- Figur 6B: den Gewindering gemäss Figur 6A, in Perspektivansicht von unten;

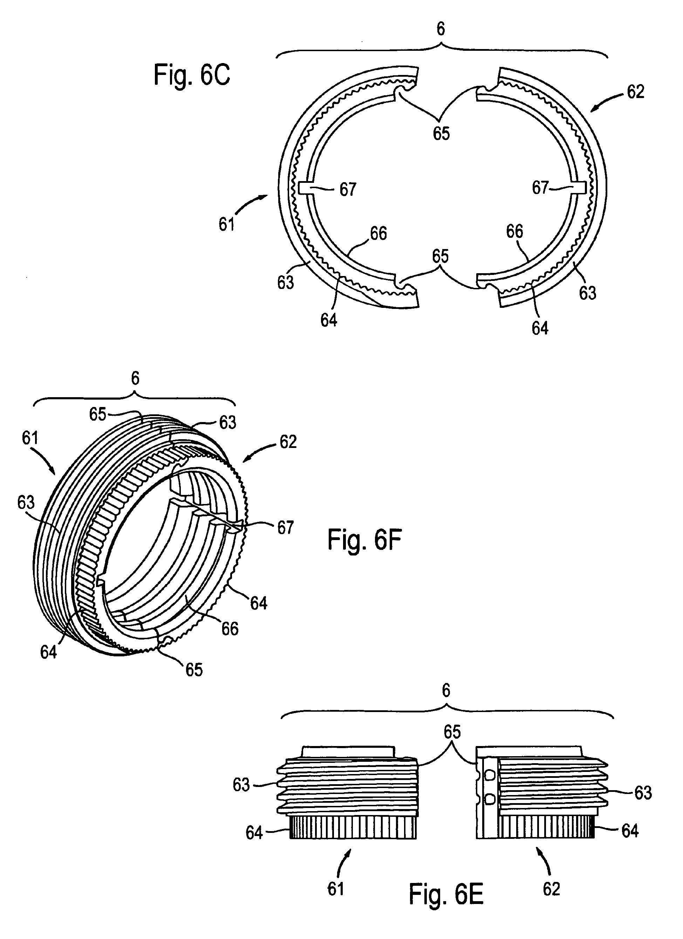

- Figur 6C: den Gewindering gemäss Figur 6A, in Vorderansicht;
- Figur 6D: den Gewindering gemäss Figur 6A, in Seitenansicht;
- Figur 6E: den Gewindering gemäss Figur 6A, in Draufsicht;
- Figur 6F: den Gewindering gemäss Figur 6A zusammengefügt, in Perspektivansicht von oben;

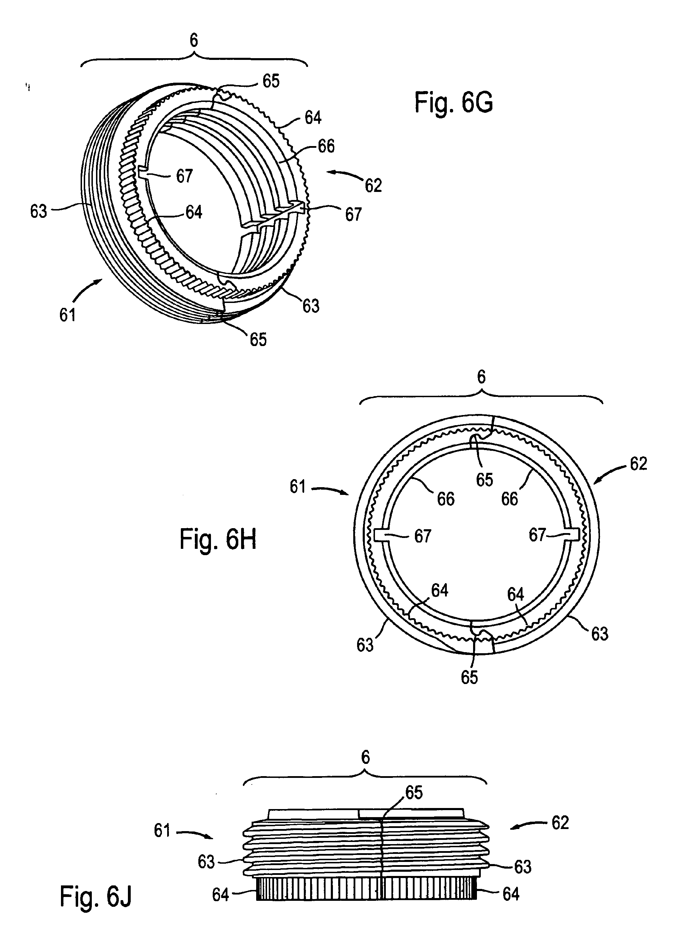

- Figur 6G: den Gewindering gemäss Figur 6F, in Perspektivansicht von unten;
- Figur 6H: den Gewindering gemäss Figur 6F, in Vorderansicht;
- Figur 6J: den Gewindering gemäss Figur 6F, in Draufsicht;

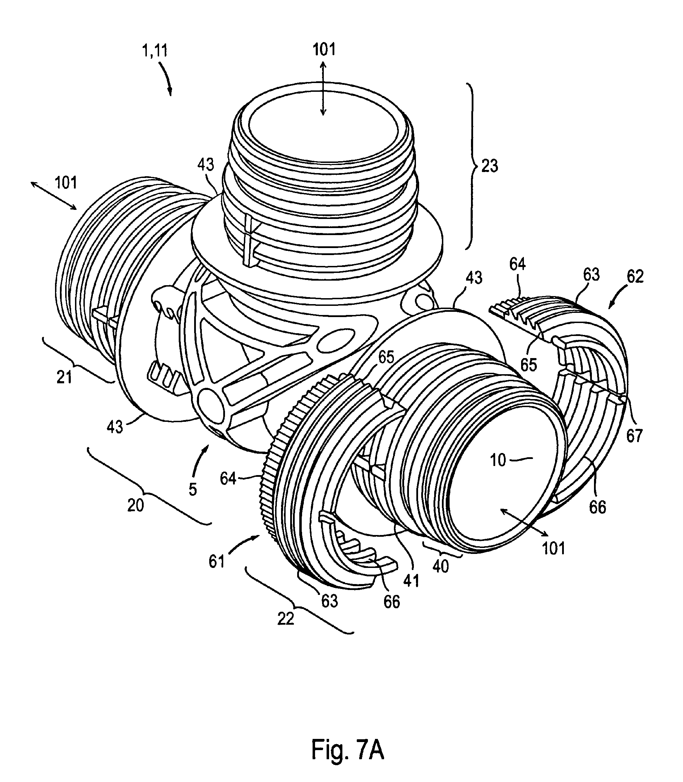

- Figur 7A: den Fitting gemäss Figur 2A mit angenähertem Gewindering gemäss Figur 6A, in Perspektivansicht von oben;

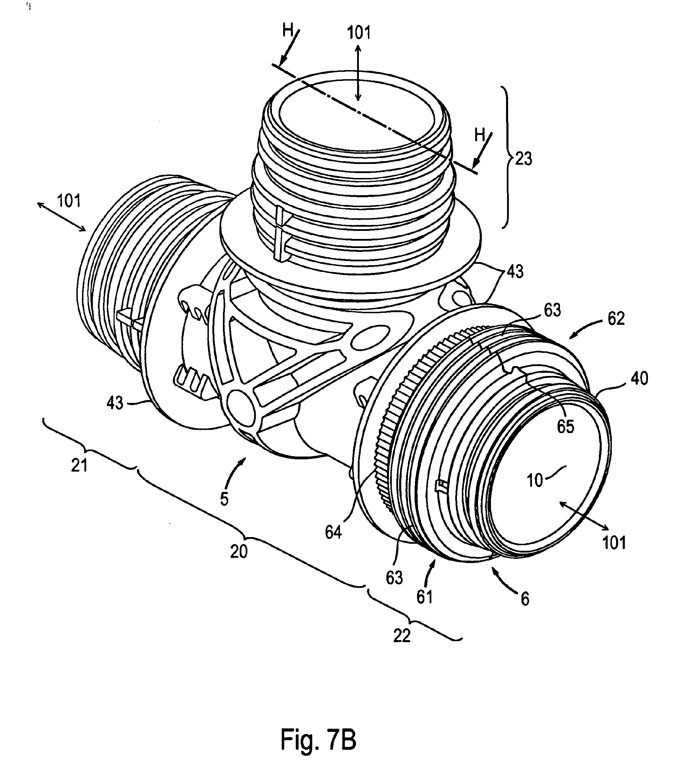

- Figur 7B: die Anordnung gemäss Figur 7A mit auf dem Fitting fixierten Gewindering, in Perspektivansicht von oben;

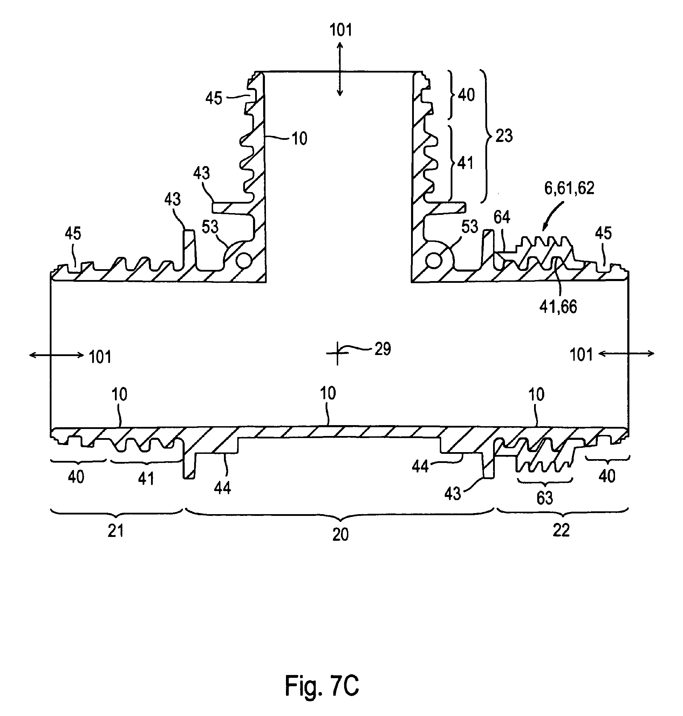

- Figur 7C: den Schnitt entlang der Linie H-H gemäss Figur 7B;

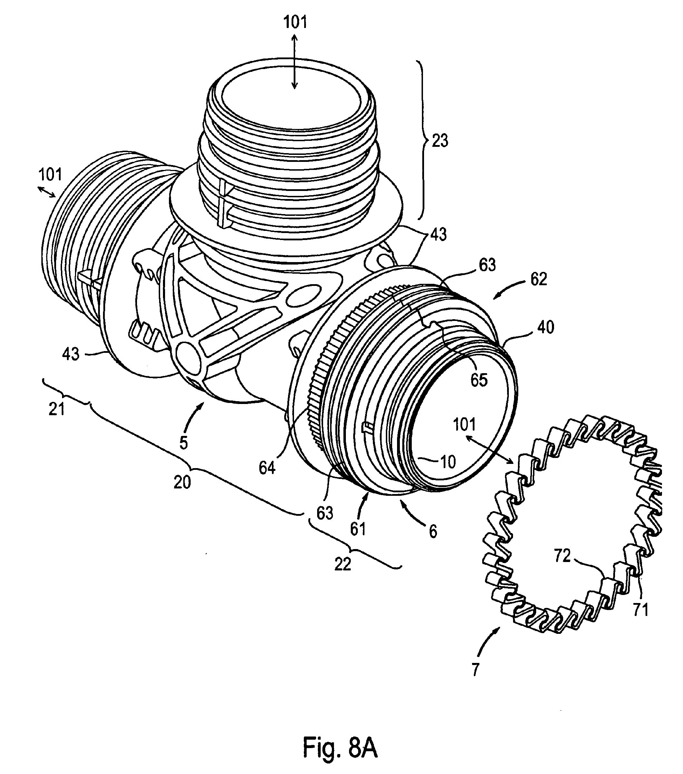

- Figur 8A: die Anordnung gemäss Figur 7B mit angenähertem Sicherungsring, in Perspektivansicht von oben;

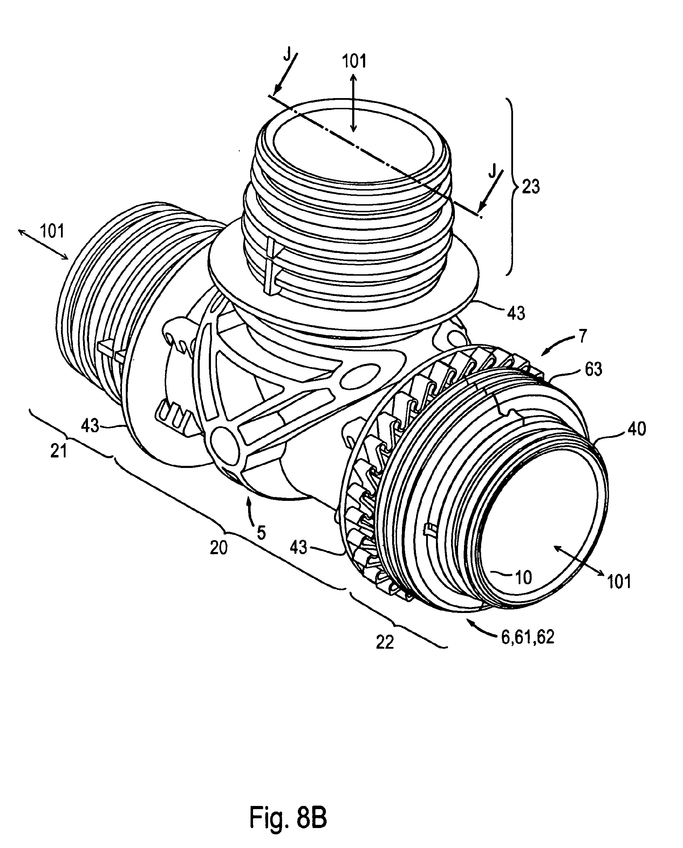

- Figur 8B: die Anordnung gemäss Figur 8A mit auf dem Gewindering aufgestecktem Sicherungsring, in Perspektivansicht von oben;

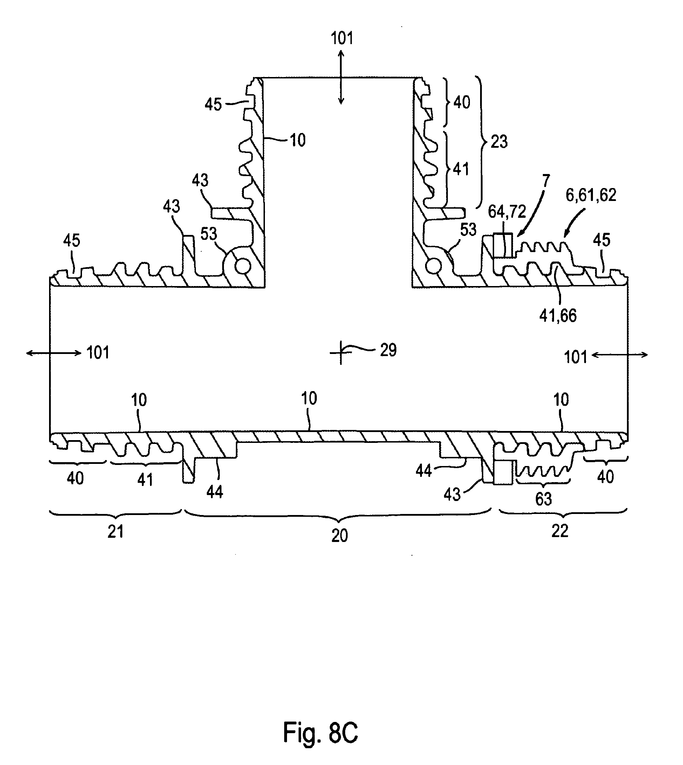

- Figur 8C: den Schnitt entlang der Linie J-J gemäss Figur 8B;
- Figuren 9A bis 9E: einen Montagevorgang mit dem Fitting in Gestalt eines T-Stücks gemäss Figur 2A, den auf seinen drei Abgängen fixierten Gewinderingen gemäss Figur 6A und darauf aufgesteckten Sicherungsringen aus Figur 8A;

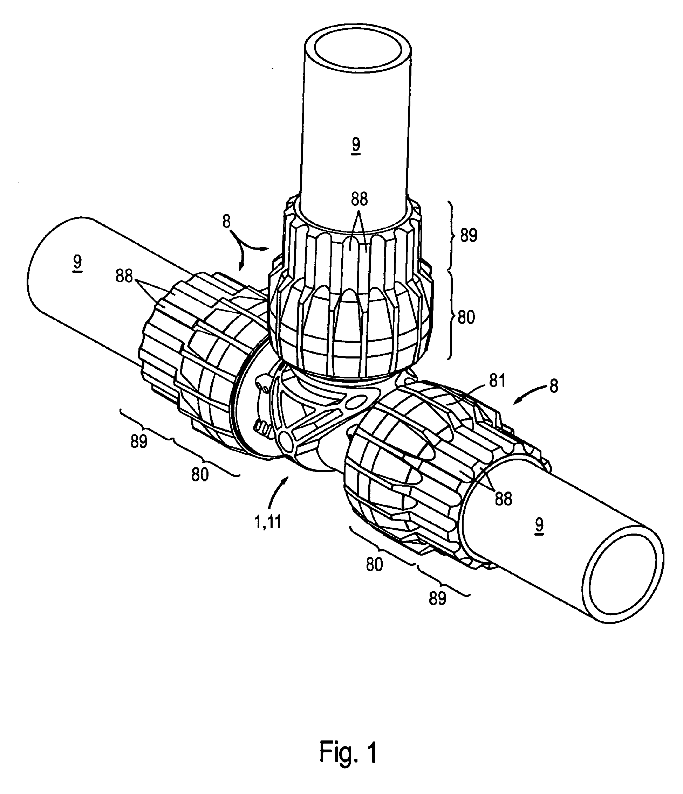

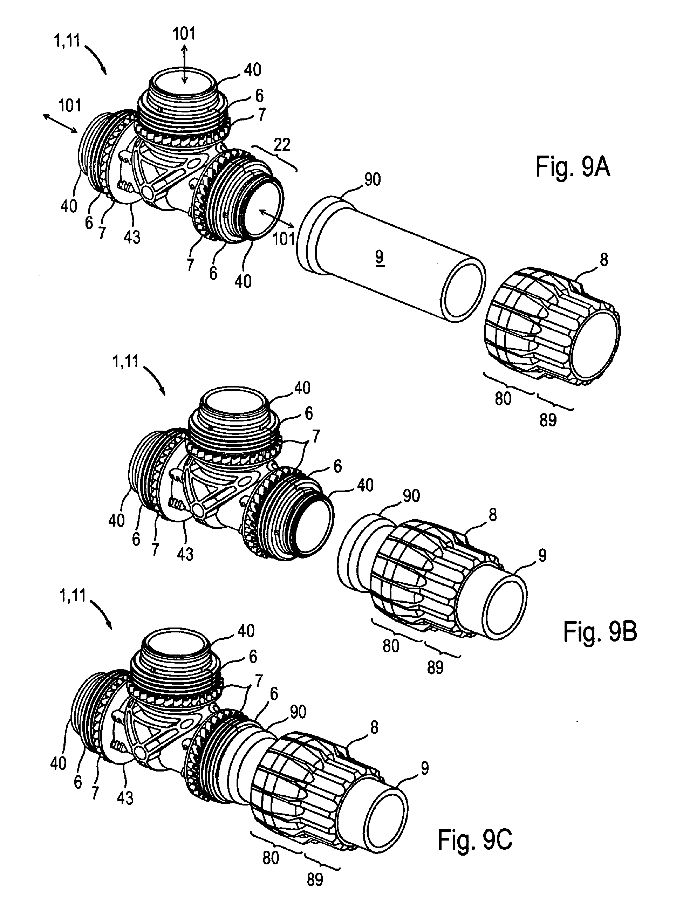

- Figur 9A: ein Rohrstück aus Figur 1 mit seiner Aufweitung der Anschlusskontur eines Stutzens des Fittings fluchtend angenähert und dazu angenäherter Überwurfmutter, in Perspektivansicht von oben;
- Figur 9B: die Anordnung gemäss Figur 9A mit auf das Rohrstück aufgeschobener Überwurfmutter;
- Figur 9C: die Anordnung gemäss Figur 9B mit auf die Anschlusskontur aufgeschobenem Rohrstück und unverschraubter Überwurfmutter;

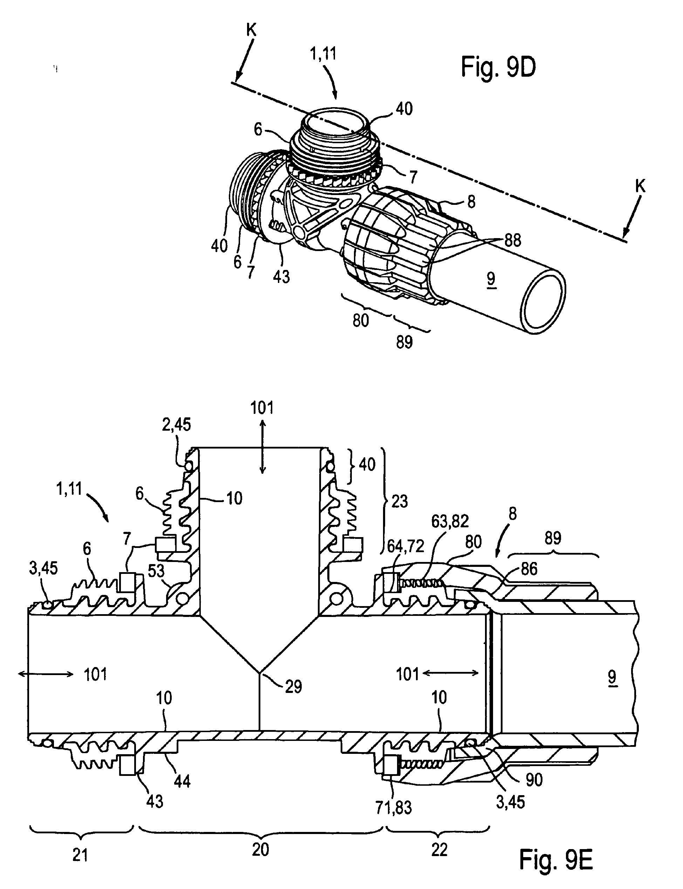

- Figur 9D: die Anordnung gemäss Figur 9C mit aufgeschraubter Überwurfmutter; und
- Figur 9E: den Schnitt entlang der Linie K-K gemäss Figur 9D.

### Ausführungsbeispiel

Mit Bezug auf die beiliegenden Zeichnungen erfolgt nachstehend die detaillierte Beschreibung eines Ausführungsbeispiels zum erfindungsgemässen Fitting in verschiedener Gestalt anhand der Details einer gesicherten Schraubverbindung mit einem am Ende aufgeweiteten Verbundrohr, wobei sich das Erfindungsprinzip auch auf andere Verbindungs- und Rohrarten erstreckt.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden oder nachfolgenden Figurenbeschreibungen Bezug genommen. Im Interesse der Übersichtlichkeit wird auf die wiederholte Bezeichnung von Bauteilen in weiteren Figuren zumeist verzichtet, sofern zeichnerisch eindeutig erkennbar ist, dass es sich um "wiederkehrende" Bauteile handelt.

### Figur 1

Ein Rohrleitungsnetz, z.B. Bestandteil der Kalt- oder Warmwasserversorgung bzw. der Heizungsanlage eines Gebäudes, besitzt typischerweise Abzweigungen und Reduktionen. Der gezeigte Ausschnitt besteht aus einem Fitting **1** in Form eines T-Stücks **11** mit an allen drei abgehenden Stutzen mit jeweils einer Überwurfmutter **8** angeschlossenen Rohrstücken **9.** Die einzelnen Überwurfmuttern **8** sind auf das T-Stück **11** geschraubt und besitzen einen Anschlussbereich **80** und einen daran angrenzenden Führungsbereich **89.** Der Anschlussbereich **80** hat eine umlaufende Griffkontur **81,** welche in eine am Führungsbereich **89** vorhandene Schlüsselkontur **88** übergeht. Die Griffkontur **81** dient dem anfänglichen Aufschrauben der Überwurfmutter **8** von Hand auf das T-Stück **11,** wobei die Schlüsselkontur **88** zum Eingriff eines Schraubwerkzeugs bestimmt ist, mittels dem die Überwurfmutter **8** festgeschraubt wird. Die an den Stutzen des T-Stücks **11** angeschlossenen Rohrstücke **9** sind daran abgedichtet und lösbar fixiert.

### Figuren 2A bis 2H

Der als T-Stück **11** ausgestaltete Fitting **1** hat ein Mittelteil **20,** von dem ein erster Stutzen **21** und ein diesem gegenüberliegender zweiter Stutzen **22** abgeht. Am Mittelteil **20** setzt quasi zwischen den beiden Stutzen **21,22** ein dritter Stutzen **23** an, der sich im rechten Winkel zu den beiden Stutzen **21,22** erstreckt. An den Übergängen zwischen dem Mittelteil **20** und den Stutzen **21-23** ist jeweils ein ringförmiger Kragen **43** vorhanden. Vom Kragen **43,** in Richtung auf die Stutzen **21-23** des T-Stücks **11,** setzt sich zunächst eine umlaufende Aufnahmekontur **41** fort, der eine Anschlusskontur **40** folgt, welche mit dem freien Ende des betreffenden Stutzens **21-23** abschliesst. Im Bereich der Aufnahmekontur **41** sind zwei Querstege **42** angeordnet, die um 180° versetzt gegenüberliegen und sich vom Kragen **43** durch die jeweilige Aufnahmekontur **41** erstrecken. Innerhalb jeder Anschlusskontur **40** ist eine umlaufende Ringnut **45** vorhanden. Die am Mittelteil **20** vorhandenen Nocken **44** grenzen an den Kragen **43** und dienen bei der Montage zum Ansetzen eines Gegenhalteschlüssels beim Festziehen der Überwurfmutter **8** mit einem Schraubwerkzeug, wie dies in der EP 1 022 504 B1, Figur 1B, gezeigt ist.

Zur Erzielung eines möglichst geringen Strömungswiderstands und damit eines maximalen Durchflusses, besitzen die Stutzen **21-23** jeweils einen im Querschnitt kreisrunden Strömungsdurchgang **101,** der mit seiner ganzen Querschnittsfläche in den sich im Mittelteil **20** fortsetzenden Strömungsdurchgang **101** mündet. Somit sind die innerlichen Strömungsquerschnitte im T-Stück **11** in Richtung aller drei Stutzen **21-23** und durch das Mittelteil **20** ohne Einengung im Querschnitt als Kreisfläche beschaffen. Dies hat zur Folge, dass die Mündung des mittleren, dritten Stutzens **23** zusammen mit dem fluchtenden kreisförmigen Strömungsquerschnitt der beiden Stutzen **21,22** eine zum dritten Stutzen **23** hin offene, kuppelförmige, gekrümmte elliptische Fläche ergibt, die zum ersten Stutzen **21** und zum zweiten Stutzen **22** hin jeweils von einer Wandungskante **100** in Form einer zur Vertikalen geneigten Wurfparabel begrenzt wird, wobei beide Wandungskanten **100** mit ihren auslaufenden Ästen trichterförmig an zwei einander gegenüberliegenden Fluchtpunkten **29** an der Innenfläche der Wandung **10** des Mittelteils **20** zusammenkommen.

Die Bereiche um diese Fluchtpunkte **29** sind bei anstehendem Druck Schwachstellen des T-Stücks **11** und ohne die im nachfolgenden beschriebene Verrippung **5** daher intensiv der Bruchgefahr ausgesetzt. Die von der Wandung **10** des Mittelteils **20** bewirkte Abstützung verstärkt sich von den Fluchtpunkten **29** entgegen dem dritten Stutzen **23** rapide, jedoch zum dritten Stutzen **23** hin, entlang der Wandungskanten **100,** nur mässig.

Um die Abstützung an den bruchgefährdeten Stellen ohne durchgehende Verdickung der Wandung **10** des Mittelteils **20** - und Vermeidung erhöhten Materialeinsatzes - zu gewährleisten, ist zwischen den drei Kragen **43,** äusserlich auf beiden Seiten am Mittelteil **20** - quasi sich gegenüberliegend - jeweils eine Verrippung **5** vorgesehen, die aus einer ersten Rippe **51,** einem Zentrum **50,** einem Paar zweiter Rippen **52** sowie zwei ersten Überbrückungen **53** und einer zweiten Überbrückung **54** besteht. Die Rippen **51,52** und die zweiten Überbrückungen **54** haben jeweils zwei parallel beabstandet zueinander verlaufende Stege mit einem dazwischenliegenden Freiraum, der sich bei den Rippen **51,52** bis auf die Oberfläche des Mittelteils **20** und bei den zweiten Überbrückungen **54** bis auf die Oberfläche des dritten Stutzens **23** erstreckt. Kongruent zu den beiden Fluchtpunkten **29** erhebt sich jeweils äusserlich des Mittelteils **20** ein zylinderförmiges Zentrum **50,** welches den Aussenumfang der Kragen **43** überragt und ein Sackloch umschliesst, das sich als Freiraum bis auf die Oberfläche des Mittelteils **20** fortsetzt.

Von jedem Zentrum **50** ausgehend erstreckt sich radial, vom dritten Stutzen abwendend, jeweils eine erste Rippe **51,** die mit abnehmender Höhe zur Unterseite des Mittelteils **20** gerichtet ist und dort mit ihren Enden aufeinander zu gerichtet ist. Von jedem Zentrum **50** aus erstreckt sich V-förmig zum dritten Stutzen **23** hin gerichtet, jeweils ein Paar zweiter Rippen **52,** die zur Wandungskante **100** kongruent liegen, wobei die Enden der zueinander komplementären zweiten Rippen **52** beider Paare aufeinander zugerichtet sind. Die Enden der zueinander komplementären zweiten Rippen **52** beider Paare sind durch eine kongruent zur jeweiligen Wandungskante **100** verlaufende erste Überbrückung **53** miteinander verbunden. Die in den Eckbereichen zwischen dem dritten Stutzen **23** und einerseits dem ersten Stutzen **21** sowie andererseits dem zweiten Stutzen **22** liegenden ersten Überbrückungen **53** bestehen vorzugsweise nicht aus zwei Stegen mit einem Freiraum, sondern aus einem röhrenförmigen Abschnitt.

Beabstandet zum Kragen **43** des dritten Stutzens **23** liegt auf jeder Seite die sich über einen Teilkreis erstreckende zweite Überbrückung **54.** Die Enden jedes Paares zweiter Rippen **52** sind durch die jeweilige zweite Überbrückung **54** miteinander verbunden, wodurch die beiden ersten Überbrückungen **53** und die beiden zweiten Überbrückungen **54** den Abgang des dritten Stutzens **23** vom Mittelteil **20** zirkulär geschlossen umlaufen. Der dem Mittelteil 20 zugewandte Steg der zweiten Überbrückung **54** erhebt sich von der Oberfläche des dritten Stutzens **23** höher als der dem dritten Stutzen **23** zugewandte Steg.

### Figuren 3A bis 3F

Der als Winkelstück **12** geformte Fitting **1** hat ein Mittelteil **20** mit der Wandung **10,** von dem sich ein erster Stutzen **21** und ein zweiter Stutzen **22** fortsetzen. Die beiden Stutzen **21,22** schliessen einen Winkel z.B. von 135° ein. Dieser eingeschlossene Winkel wird als Innenwinkel definiert, während der zum Vollkreis sich ergänzende Winkel als Aussenwinkel bezeichnet wird. Zwischen dem Mittelteil **20** und den Stutzen **21,22** ist an den Übergängen jeweils ein ringförmiger Kragen **43** vorhanden. Benachbart zu den Kragen **43** hat das Mittelteil **20** wiederum Nocken **44.** Die Stutzen **21,22** haben, wie jene des T-Stücks **11,** eine Aufnahmekontur **41** mit den Querstegen **42** und eine Anschlusskontur **40** mit der Ringnut **45.**

Die beiden Stutzen **21,22** haben wieder jeweils einen im Querschnitt kreisrunden Strömungsdurchgang **101,** der mit seiner ganzen Querschnittsfläche in den sich im Mittelteil **20** fortsetzenden Strömungsdurchgang **101** mündet. An der Abwinkelung im Mittelteil **20** entsteht innerlich eine Wandungskante **100** in Form einer zur Vertikalen geneigten Wurfparabel, die mit ihren auslaufenden Ästen an zwei einander gegenüberliegenden Fluchtpunkten **29** an der Innenseite der Wandung **10** des Mittelteils **20** ansetzt. Zur Verstärkung ist äusserlich auf beiden Seiten am Mittelteil **20** - quasi sich gegenüberliegend - jeweils eine Verrippung **5** vorgesehen, die aus einer ersten Rippe **51,** einem Zentrum **50,** einer zweiten Rippe **52** und einer ersten Überbrückung **53** besteht. Die Rippen **51,52** haben jeweils zwei parallel beabstandet zueinander verlaufende Stege mit einem dazwischenliegenden Freiraum, der sich bis auf die Oberfläche des Mittelteils **20** erstreckt. Kongruent zu den beiden Fluchtpunkten **29** erhebt sich jeweils äusserlich des Mittelteils **20** ein zylinderförmiges Zentrum **50,** welches den Aussenumfang der Kragen **43** nicht überragt und ein Sackloch umschliesst, das sich als Freiraum bis auf die Oberfläche des Mittelteils **20** fortsetzt.

Von jedem Zentrum **50** ausgehend erstreckt sich radial jeweils eine erste Rippe **51,** die mit abnehmender Höhe zum Aussenwinkel am Mittelteil **20** gerichtet ist und dort mit ihren Enden aufeinander zugerichtet sind. Von jedem Zentrum **50** aus erstreckt sich zum Innenwinkel hin gerichtet, jeweils eine zweite Rippe **52,** die zur Wandungskante **100** kongruent liegt, wobei die Enden der zweiten Rippen **52** aufeinander zu gerichtet sind. Die Enden der zweiten Rippen **52** sind durch eine kongruent zur Wandungskante **100** verlaufende erste Überbrückung **53** miteinander verbunden. Die im Bereich des Innenwinkels liegende erste Überbrückung **53** besteht aus einem röhrenförmigen Abschnitt.

### Figuren 4A bis 4G

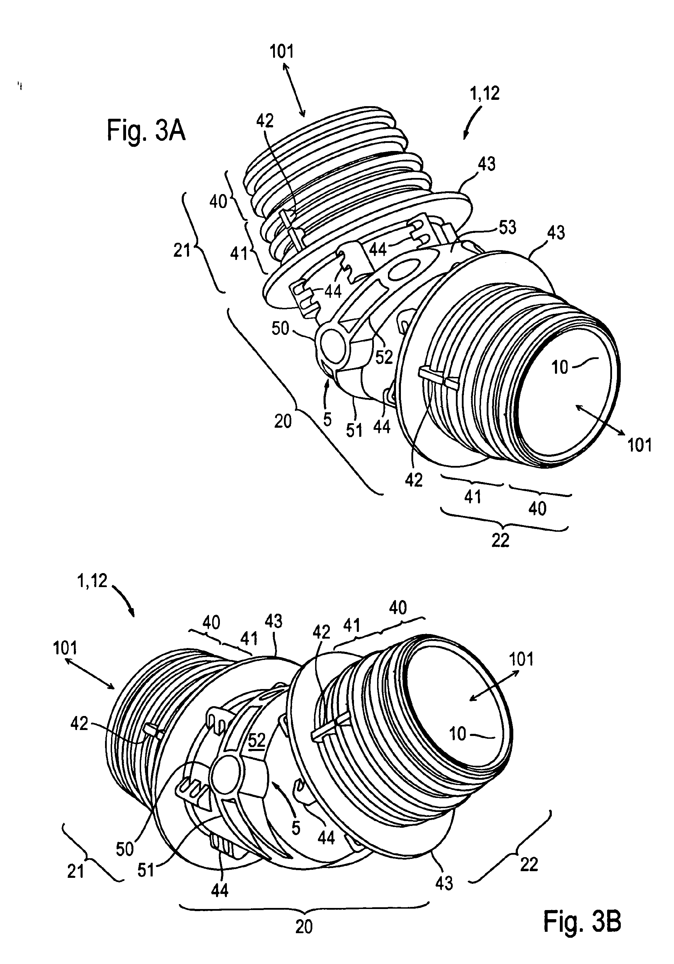

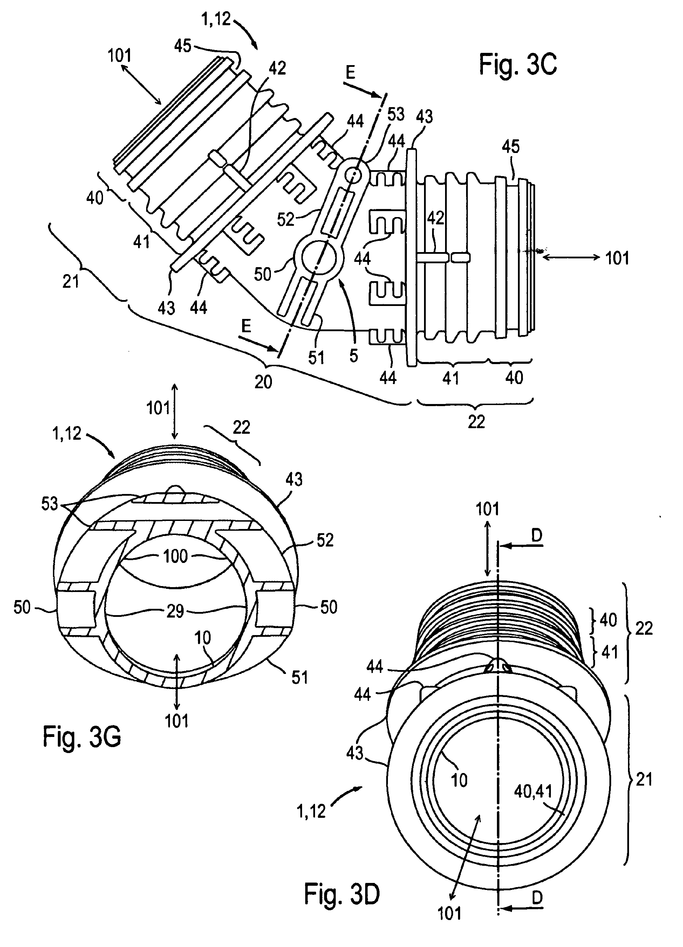

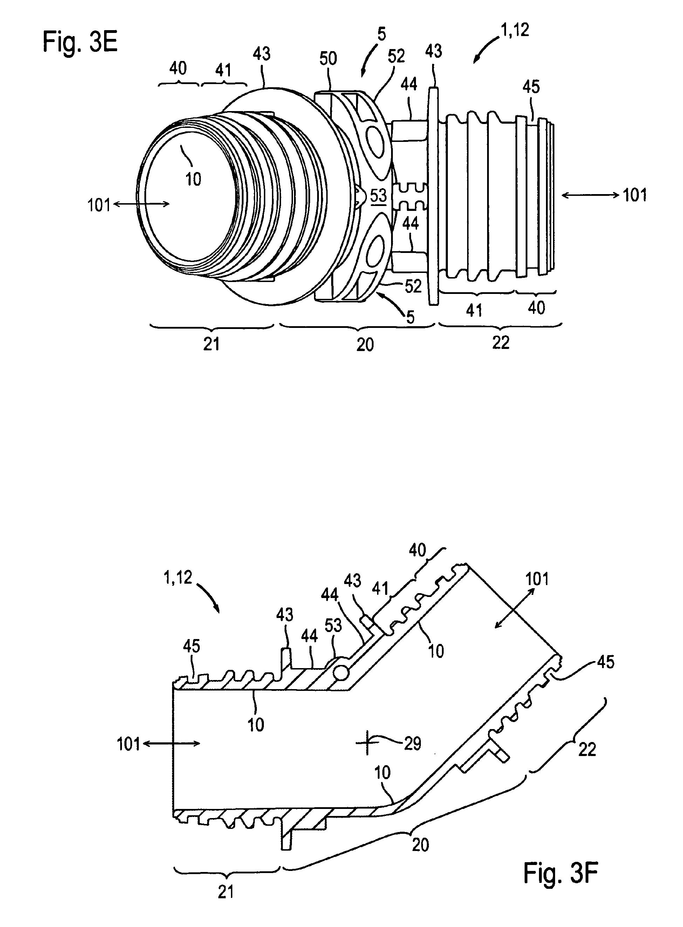

Das hier gezeigte Winkelstück **13** unterscheidet sich vom Winkelstück **12** gemäss den Figuren 3A-3F nur durch den nun zwischen beiden Stutzen **21,22** eingeschlossenen Innenwinkel von 90°. An der Abwinkelung im Mittelteil **20** entsteht innerlich eine Wandungskante **100** in Form einer Wurfparabel, jedoch mit engerer Krümmung, die sich wiederum von den beiden einander gegenüberliegenden Fluchtpunkten **29** an der Innenwandung des Mittelteils **20** erstreckt. Daher hat man die Zentren **50** höher, nämlich die Kragen **43** überragend ausgebildet.

### Figur 5

Der als gerade Muffe **14** gestaltete Fitting **1** dient zur Vervollständigung des Systems von Rohrverbindern und bedarf aufgrund seiner Gestaltung keiner Verrippung **5.** Vom geraden Mittelteil **20** mit den äusseren Nocken **44** gehen in diametraler Richtung die beiden Stutzen **21,22** ab, welche jeweils eine Anschlusskontur **40** und eine Aufnahmekontur **41** sowie den Kragen **43** besitzen. Durch die gesamte Muffe **14** erstreckt sich axial der Strömungsdurchgang **101.**

### Figuren 6A bis 6J

Der im Prinzip zylinderförmige Gewindering **6** besteht aus einer ersten Halbschale **61** und einer zweiten Halbschale **62** mit daran vorhandenen Rastorganen **65,** die zum komplementären Eingriff untereinander bestimmt sind. Am jeweiligen Aussenumfang der Halbschalen **61,62** verläuft ein anteiliges Aussengewinde **63,** zu dem benachbart eine Verzahnung **64** vorhanden ist. Die Halbschalen **61,62** haben an ihrem Innenumfang eine Gegenkontur **66,** z.B. in Form von Radialnuten, die in axialer Richtung parallel zueinander beabstandet sind. Durch die Gegenkontur **66** erstreckt sich in axialer Richtung jeweils eine Quernut **67.** Im zusammengefügten Zustand kommen die Rastorgane **65** miteinander in Eingriff und die anteiligen Aussengewinde **63** und Verzahnungen **64** ergänzen sich zirkulär ganz umlaufend. Das einzelne Rastorgan **65** besteht aus einem Nasenelement und einer anschliessenden Vertiefung, die von beiden Halbschalen **61,62** wechselseitig ineinandergreifen. Beide Halbschalen **61,62** sind ausreichend flexibel, um das Zusammenfügen zu ermöglichen.

### Figur 7A

Die erste Halbschale **61** und die zweite Halbschale **62** des Gewinderings **6** sind dem als T-Stück **11** ausgebildeten Fitting **1** im Bereich des zweiten Stutzens **22** angenährt. Die Gegenkontur **66** der beiden Halbschalen **61,62** weist in Richtung der Aufnahmekontur **41** am zweiten Stutzen **22,** wobei die Verzahnung **64** dem Kragen **43** zugewandt ist. Die Quernuten **67** der beiden Halbschalen **61,62** befinden sich benachbart zu den an der Aufnahmekontur **41** des T-Stücks **11** befindlichen Querstegen **42.**

### Figuren 7B und 7C

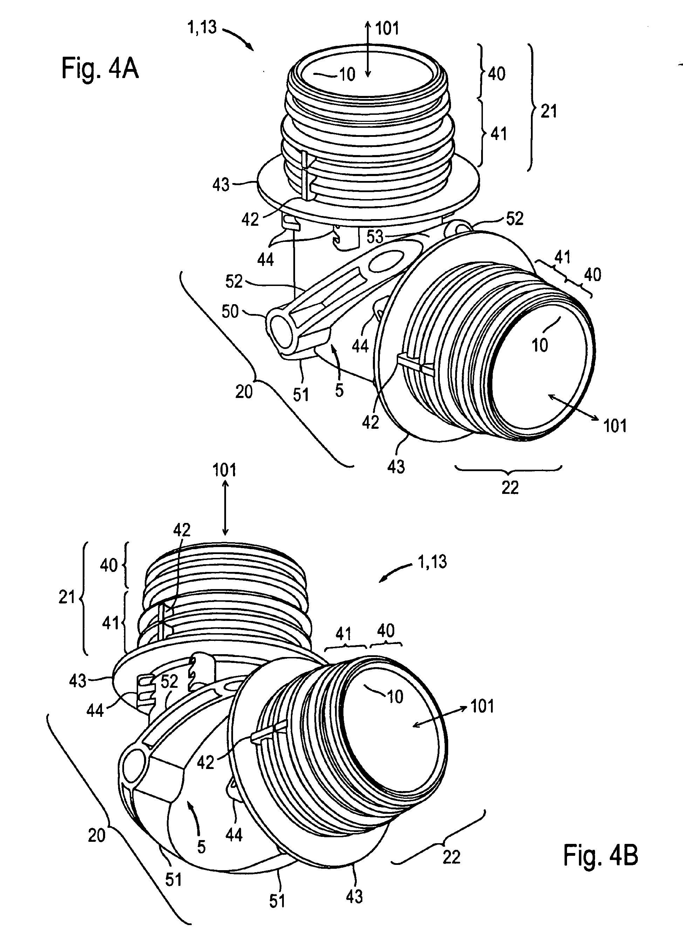

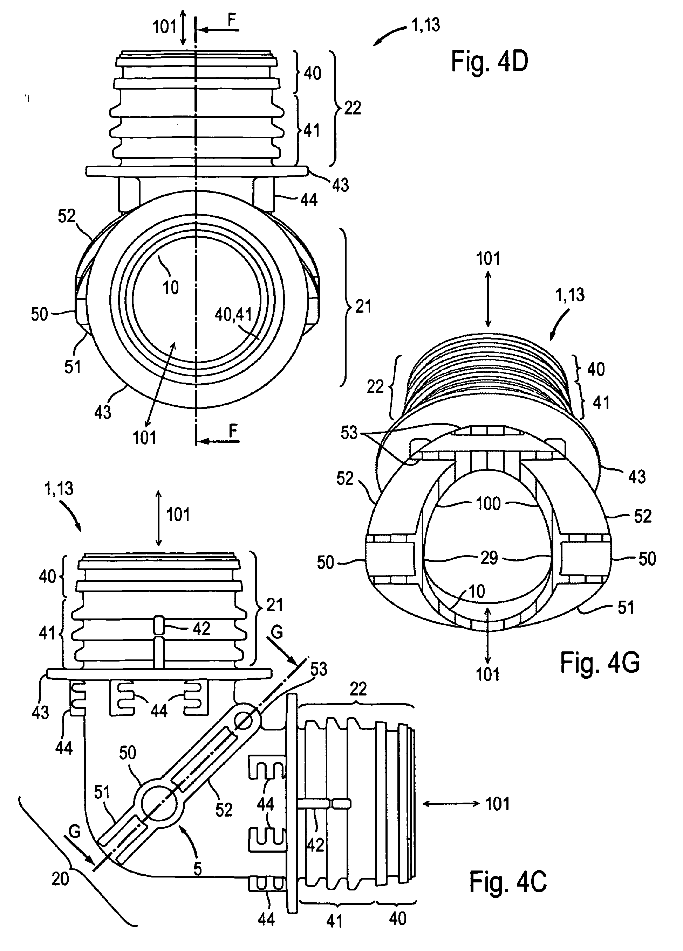

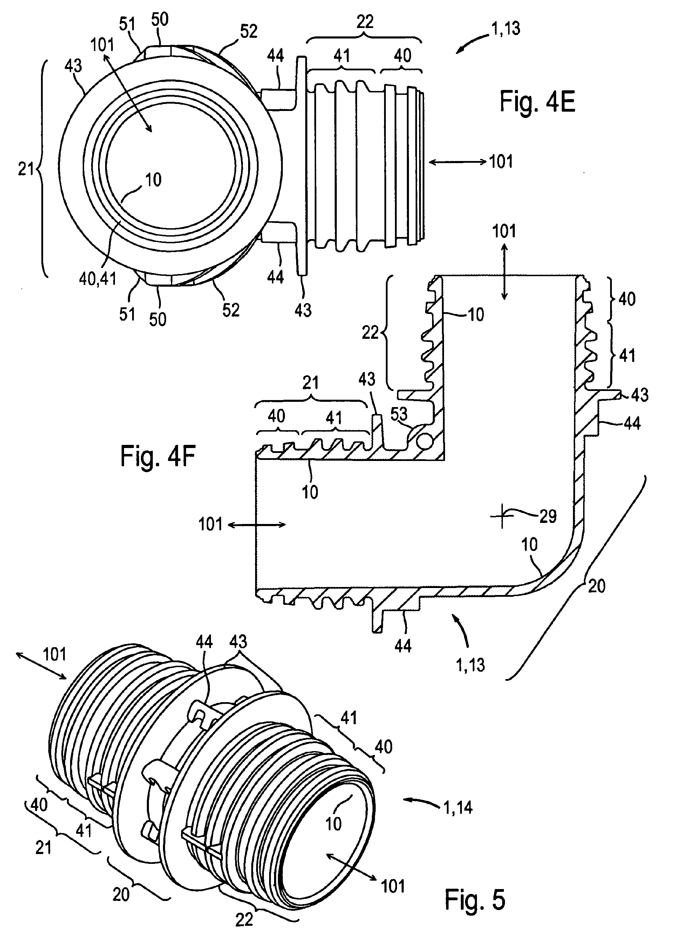

Bei diesem Figurenpaar ist der Gewindering **6** vollständig auf dem T-Stück **11** positioniert. Dabei greifen die Rastorgane **65** der beiden Halbschalen **61,62** ineinander, die Gegenkontur **66** steht in Eingriff mit der Aufnahmekontur **41** und die Quernuten **67** umgreifen die Querstege **42.** Die zirkuläre Verzahnung **64** des Gewinderings **6** liegt am Kragen **43** an, wobei der umlaufende Rand des Kragens **43** die Verzahnung **64** und das Aussengewinde **63** überragt. Der Gewindering **6** ist zwischen dem Kragen **43** und der Anschlusskontur **40** auf der Aufnahmekontur **41** positioniert. Exemplarisch ist hier nur der auf dem zweiten Stutzen **22** positionierte Gewindering **6** gezeigt, wobei in gleicher Weise auch auf dem ersten und dritten Stutzen **21,23** Gewinderinge **6** positionierbar sind. Äquivalent sind Gewinderinge **6** auf den Aufnahmekonturen **41** der Winkelstücke **12,13** (s. Figuren 3A-4G) und der Muffe **14** (s. Figur 5) positionierbar.

### Figur 8A

Dem T-Stück **11** mit auf seinem zweiten Stutzen **22** positioniertem Gewindering **6,** ist von dieser Seite ein Sicherungsring **7** angenähert. Der Sicherungsring **7** hat eine Aussenkontur **71** sowie eine Innenkontur **72** und ist Gegenstand der EP 2 053 292 A1.

### Figuren 8B und 8C

Der Sicherungsring 7 wird während der Montage aufgeweitet axial auf die Verzahnung **64** des Gewinderings **6** aufgeschoben und umspannt in der bestimmungsgemässen Endlage, zwischen dem Kragen **43** und dem Aussengewinde **63** liegend, die an das Aussengewinde **63** anschliessende Verzahnung **64.** Hierbei kommtdie Innenkontur **72** des Sicherungsrings **7** mit der Verzahnung **64** des Gewinderings **6** in quasi rotationsgehemmten Eingriff. Damit trägt der Sicherungsring **7** auch zum Zusammenhalt der beiden Halbschalen **61,62** des Gewinderings 6 bei.

### Figuren 9A bis 9E

Diese Figurengruppe zeigt die sukzessive Herstellung einer verschraubten Rohrverbindung zwischen einem Rohrstück **9** und einem Fitting **1,** am Beispiel des zweiten Stutzens **22** eines T-Stücks **11** mit bereits daran montiertem Gewindering **6** und von diesem getragenen Sicherungsring 7 mit Verwendung einer Überwurfmutter **8.** Auch die anderen Stutzen **21,23** sind bereits mit dem Gewindering **6** und dem Sicherungsring 7 für den hier nicht dargestellten Anschluss von weiteren Rohrstücken **9** versehen.

Zunächst ist das Rohrstück **9** mit seiner dem zweiten Stutzen **22** zugewandten Aufweitung **90** fluchtend angenähert und die Überwurfmutter **8** liegt zum Aufschieben auf das Rohrstück **9** bereit oder wurde vor Fertigung der Aufweitung **90** auf das Rohrstück **9** aufgeschoben (s. Figuren 9A und 9B).

In einem weiteren Schritt ist das Rohrstück **9** so weit auf den zweiten Stutzen **22** des T-Stücks **11** aufgesteckt, dass die Anschlusskontur **40** von der Aufweitung **90** umfasst wird (s. Figur 9C).

Nun lässt sich das Innengewinde **82** der Überwurfmutter **8** zunächst von Hand auf das Aussengewinde **63** des Gewinderings **6** aufschrauben und schliesslich mit den dafür vorgesehenen Werkzeugen festziehen (s. Figuren 9D und 9E). Dazu werden an der Schlüsselkontur **88** ein Schraubwerkzeug und vorsichtshalber ein Gegenhalteschlüssel an den Nocken **44** des Mittelteils **20** angesetzt. In der Endstellung kann die Überwurfmutter **8** mit ihrer Frontkante am Kragen **43** anliegen. Dabei ist die innerlich am freien Ende des Anschlussbereichs **80** vorhandene Innenverzahnung **83** der Überwurfmutter **8** vollständig über den Sicherungsring **7** gewandert. Die Innenverzahnung **83** ist mit der Aussenkontur **71** des Sicherungsrings **7** und dessen Innenkontur **72** mit der Aussenverzahnung **64** am Gewindering **6** in Eingriff. Durch den Sicherungsring **7** ist für das Lösen der Schraubverbindung zwischen der Überwurfmutter **8** und dem Gewindering **6** ein grösseres Lösemoment zu generieren als das Anzugsmoment beim Verschrauben. Damit wird die Schraubverbindung gegen selbständiges Lösen, z.B. infolge von Vibrationen, gesichert.

Ferner presst eine zwischen dem Anschlussbereich **80** und dem Führungsbereich **89** der Überwurfmutter **8** liegende Innenschulter **86** auf den Rücken der Aufweitung **90** des Rohrstücks **9** und zwängt dadurch die Aufweitung 90 auf die Anschlusskontur **40,** in deren Ringnut **45** zur Bildung einer Dichtstelle die Dichtung **3** liegt.

Es sei abschliessend nochmals betont, dass die Erfindung mit den Fittings **1** zur Herstellung einer Rohrverbindung nicht auf die vorstehend beschriebene geschraubte Verbindung mit dem Rohrstück **9** beschränkt ist. Neben der Schraubverbindung sind auch durch Stecken, Pressen, Löten oder Schweissen hergestellte Verbindungen einzubeziehen.

## Patentansprüche

1. Fitting **(1)** zur Herstellung einer Rohrverbindung, wobei der Fitting (1) als ein T-Stück (11) ausgebildet ist, wobei:
a) das T-Stück **(11)** eine Wandung **(10)** sowie ein Mittelteil **(20)** besitzt, von dem sich drei Stutzen **(21-23)** erstrecken;
b) jeder Stutzen **(21-23)** mit einer Anschlusskontur **(40)** zur Aufnahme eines Endes **(90)** eines Rohrstücks **(9)** versehen ist;
c) die Stutzen **(21-23)** jeweils einen zumindest im Prinzip im Querschnitt kreisrunden Strömungsdurchgang **(101)** besitzen, der mit seiner Querschnittsfläche in den sich im Mittelteil **(20)** fortsetzenden Strömungsdurchgang **(101)** mündet;
d) innerlich des T-Stücks **(11)** an der Mündung des Strömungsdurchgangs **(101)** des mittleren dritten Stutzens **(23)** in den Strömungsdurchgang **(101)** des Mittelteils **(20)** zwei Wandungskanten **(100)** in Form von zur Vertikalen geneigten Wurfparabeln entstehen, die trichterförmig mit ihren auslaufenden Ästen an zwei einander gegenüberliegenden Fluchtpunkten **(29)** an der Wandung **(10)** des Mittelteils **(20)** zusammenkommen;
e) zur Verstärkung der am T-Stück **(11)** Schwachstellen bildenden Wandungskanten **(100)** gegen die im Betrieb auf das Mittelteil **(20)** wirkende Druckbelastung beidseits am T-Stück **(11)** jeweils eine äussere Verrippung **(5)** vorgesehen ist, welche besteht aus:
ea) jeweils einem zu jedem Fluchtpunkt **(29)** kongruent positionierten Zentrum **(50);**
eb) jeweils einer ersten Rippe **(51),** die sich von jedem Zentrum **(50)** vom dritten Stutzen **(23)** abwendend erstreckt und deren Enden aufeinander zugerichtet sind;
ec) jeweils ein Paar zweiter Rippen **(52),** die sich von jedem Zentrum **(50)** V-förmig zum dritten Stutzen **(23)** gerichtet erstrecken, wobei die Enden der zueinander komplementären zweiten Rippen **(52)** beider Paare aufeinander zugerichtet sind, **dadurch gekennzeichnet, dass**
f) die Enden der zueinander komplementären zweiten Rippen **(52)** beider Paare durch eine kongruent zur jeweiligen Wandungskante **(100)** verlaufende erste Überbrückung **(53)** miteinander verbunden sind.

2. Fitting (1) nach Anspruch 1, **dadurch gekennzeichnet, dass** die Enden jedes Paares zweiter Rippen **(52)** durch eine zweite Überbrückung **(54)** miteinander verbunden sind, wodurch die beiden ersten Überbrückungen **(53)** und die beiden zweiten Überbrückungen **(54)** den Abgang des dritten Stutzens **(23)** vom Mittelteil **(20)** zirkulär geschlossen umlaufen.

3. Fitting (1) nach zumindest einem der Ansprüche 1 und 2, **dadurch gekennzeichnet, dass**
a) die zweite Überbrückung **(54)** aus zwei parallel beabstandet zueinander verlaufenden Stegen mit einem dazwischenliegenden Freiraum besteht, der sich bis auf die Oberfläche des dritten Stutzens **(23)** erstreckt; und
b) der dem Mittelteil **(20)** zugewandte Steg der zweiten Überbrückung **(54)** sich von der Oberfläche des dritten Stutzens (23) höher erhebt als der dem dritten Stutzen **(23)** zugewandte Steg.

4. Fitting (**1**) zur Herstellung einer Rohrverbindung, wobei der Fitting (1) als ein Winkelstück (12, 13) ausgebildet ist, wobei:
a) das Winkelstück **(12,13)** eine Wandung **(10)** sowie ein Mittelteil **(20)** besitzt, von dem sich zwei Stutzen **(21,22)** erstrecken, die einen Innenwinkel < 180° einschliessen, dem ein Aussenwinkel > 180° gegenüberliegt;
b) jeder Stutzen **(21,22)** mit einer Anschlusskontur **(40)** zur Aufnahme eines Endes **(90)** eines Rohrstücks **(9)** versehen ist;
c) die Stutzen **(21,22)** jeweils einen zumindest im Prinzip im Querschnitt kreisrunden Strömungsdurchgang **(101)** besitzen, der mit seiner Querschnittsfläche in den sich im Mittelteil **(20)** fortsetzenden Strömungsdurchgang **(101)** mündet, wodurch sich ergeben:
d) innerlich des Winkelstücks **(12,13)** an der Einmündung des sich vom ersten Stutzen **(21)** erstreckenden Strömungsdurchgangs **(101)** in den sich vom zweiten Stutzen **(22)** erstreckenden Strömungsdurchgang **(101)** eine Wandungskante **(100)** in Form einer zur Vertikalen geneigten Wurfparabel entsteht, die mit ihren auslaufenden Ästen an zwei einander gegenüberliegenden Fluchtpunkten **(29)** an der Wandung **(10)** des Mittelteils **(20)** ansetzt;
e) zur Verstärkung der am Winkelstück **(12,13)** Schwachstellen bildenden Wandungskante **(100)** gegen die im Betrieb auf das Mittelteil **(20)** wirkende Druckbelastung beidseits am Winkelstück **(12,13)** jeweils eine äussere Verrippung (5) vorgesehen ist, welche besteht aus:
ea) jeweils einem zu jedem Fluchtpunkt **(29)** kongruent positionierten Zentrum **(50);**
eb) jeweils einer ersten Rippe **(51),** die sich von jedem Zentrum **(50)** zum Aussenwinkel gerichtet erstreckt und deren Enden aufeinander zu gerichtet sind;
ec) jeweils eine zweite Rippe **(52),** die sich von jedem Zentrum **(50)** zum Innenwinkel gerichtet erstreckt, wobei die Enden der zweiten Rippen **(52)** aufeinander zu gerichtet sind, **dadurch gekennzeichnet, dass**
f) die Enden der zweiten Rippen **(52)** durch eine kongruent zur Wandungskante **(100)** verlaufende erste Überbrückung **(53)** miteinander verbunden sind.

5. Fitting (1) nach Anspruch 4, **dadurch gekennzeichnet, dass** das Winkelstück **(12,13)** mit einem Innenwinkel von 90° oder 135° ausgebildet ist.

6. Fitting (1) nach zumindest einem der Ansprüche 4 und 5, **dadurch gekennzeichnet, dass** bei einem Winkelstück **(13)** mit einem kleineren Innenwinkel, von z.B. 90°, sich das Zentrum **(50)** von der Oberfläche des Mittelteils **(20)** höher erhebt als bei einem Winkelstück **(12)** mit einem grösseren Innenwinkel, von z.B. 135°.

7. Fitting **(1)** nach zumindest einem der Ansprüche 1 bis 6, **dadurch gekennzeichnet, dass** der Fitting **(1)** aus Kunststoff als Einschicht-Spritzgiessteil ausgebildet ist.

8. Fitting **(1)** nach zumindest einem der Ansprüche 1 bis 7, **dadurch gekennzeichnet, dass**
a) das Zentrum **(50)** der Verrippung **(5)** zylinderförmig ist und ein Sackloch umschliesst, das sich als Freiraum bis auf die Oberfläche des Mittelteils **(20)** fortsetzt;
b) die ersten Rippen **(51)** und zweiten Rippen **(52)** mit zunehmender Entfernung vom Zentrum **(50)** in der Höhe abnehmen und jeweils zwei parallel beabstandet zueinander verlaufende Stege mit einem dazwischenliegenden Freiraum haben, der sich bis auf die Oberfläche des Mittelteils **(20)** erstreckt; und
c) die ersten Überbrückungen **(53)** zwischen den zweiten Rippen **(52)** röhrenförmig ausgebildet sind.

9. Fitting **(1)** nach zumindest einem der Ansprüche 1 bis 8, **dadurch gekennzeichnet, dass**
a) jeder Stutzen **(21-23)** mit einem Aussengewinde **(63)** versehen ist, das zur Verschraubung mit einem Innengewinde **(82)** einer Überwurfmutter **(8)** dient;
b) das Ende **(90)** des Rohrstücks **(9)** mit einer Aufweitung **(90)** versehen ist; und
c) die Anschlusskontur **(40)** sich äusserlich am Stutzen **(21-23)** befindet.

10. Fitting **(1)** nach zumindest einem der Ansprüche 1 bis 9, **dadurch gekennzeichnet, dass**
a) jeder Stutzen **(21-23)** einen Kragen **(43)** hat, der an das Mittelteil **(20)** angrenzt; und
b) am Übergang vom Kragen **(43)** auf das Mittelteil **(20)** erhabene Nocken **(44)** systematisch verteilt sind, die beim Festziehen der Überwurfmutter **(8)** oder Lösen dieser aus festgezogenem Zustand für das Ansetzen eines Gegenhalteschlüssels nutzbar sind.

11. Fitting **(1)** nach zumindest einem der Ansprüche 1 bis 10, **dadurch gekennzeichnet, dass** die Anschlusskontur **(40)** zur Aufnahme der Aufweitung **(90)** eine Ringnut **(45)** hat, welche dem Einsetzen einer Dichtung **(3)** zur Bildung einer Dichtstelle mit der Aufweitung **(90)** dient.

12. Fitting **(1)** nach zumindest einem der Ansprüche 1 bis 11, **dadurch gekennzeichnet, dass**
a) am Stutzen **(21-23)** benachbart zur Anschlusskontur **(40)** eine Aufnahmekontur **(41)** vorhanden ist, die an den jeweils zugehörigen Kragen **(43)** angrenzt und der Positionierung eines Gewinderings **(6)** dient; und
b) der Gewindering **(6)** das zum Innengewinde **(82)** der Überwurfmutter **(8)** komplementäre Aussengewinde **(63)** trägt.

13. Fitting **(1)** nach zumindest einem der Ansprüche 1 bis 12, **dadurch gekennzeichnet, dass**
a) der Gewindering **(6)** aus einer ersten Halbschale **(61)** und einer zweiten Halbschale **(62)** besteht, die das Aussengewinde **(63)** hälftig tragen und zum Zusammenfügen bestimmt sind;
b) die Halbschalen **(61,62)** innerlich eine Gegenkontur **(66)** aufweisen, die mit der Aufnahmekontur **(41)** am Stutzen **(21-23)** passfähig ist; und
c) die Halbschalen **(61,62)** vorzugsweise aus Kunststoff als Spritzgiessteile ausgebildet sind.

14. Fitting **(1)** nach zumindest einem der Ansprüche 1 bis 13, **dadurch gekennzeichnet, dass**
a) die zum verrasteten Zusammenfügen bestimmten Halbschalen **(61,62)** an ihren Enden mit zueinander komplementären Rastorganen **(65)** versehen sind;
b) die Aufnahmekontur **(41)** an den Stutzen **(21-23)** zueinander beabstandete Ringe hat und die Gegenkontur **(66)** in den Halbschalen **(61,62)** dazu formschlüssige Radialnuten hat;
c) das einzelne Rastorgan **(65)** aus einem Nasenelement und einer anschliessenden Vertiefung besteht, die von beiden Halbschalen **(61,62)** wechselseitig ineinandergreifen; und
d) zur Rotationssicherung des auf die an den Stutzen **(21-23)** aufmontierten Gewinderings **(6)** in der Aufnahmekontur **(41)** erste Stopperelemente **(42),** z.B. Querstege, angebracht sind, die mit innerhalb der Gegenkontur **(66)** in den Halbschalen **(61,62)** geformten zweiten Stopperelementen **(67),** z.B. Quernuten, zusammenwirken.

15. Fitting **(1)** nach zumindest einem der Ansprüche 1 bis 14, **dadurch gekennzeichnet, dass**
a) die Überwurfmutter (8) sich in einen den Stutzen **(21-23)** zugewendeten Anschlussbereich **(80)** mit dem darin angeordneten Innengewinde **(82)** und einen dem Rohrstück **(9)** zugewendeten Führungsbereich **(89)** gliedert;
b) dem Innengewinde **(82)** zum freien Ende des Anschlussbereichs **(80)** vorgelagert eine erste Profilierung (83) angeordnet ist, vorzugsweise in Gestalt einer umlaufenden, axial orientierten Verzahnung;
c) die Halbschalen **(61,62)** des Gewinderings **(6)** neben dem jeweils hälftigen Aussengewinde **(63)** eine jeweils hälftige zweite Profilierung **(64)** tragen, vorzugsweise in Gestalt einer umlaufenden, axial orientierten Verzahnung, welche als Träger für einen Sicherungsring **(7)** bestimmt ist; und
d) bei vollständig auf das Aussengewinde **(63)** des Gewinderings **(6)** aufgeschraubter Überwurfmutter **(8)** der Sicherungsring **(7)** zwischen den Profilierungen **(64,83)** zur Lösehemmung der Überwurfmutter **(8)** gefasst ist.

16. Fitting **(1)** nach zumindest einem der Ansprüche 1 bis 15, **dadurch gekennzeichnet, dass** der Sicherungsring **(7):**
a) eine Innenkontur **(72)** hat, die rastend in die zweite Profilierung **(64)** am Gewindering **(6)** eingreift;
b) eine Aussenkontur **(71)** hat, die rastend in die erste Profilierung **(83)** an der Überwurfmutter **(8)** eingreift; und somit
c) für das Lösen der Schraubverbindung zwischen Überwurfmutter **(8)** und Gewindering **(6)** ein grösseres Lösemoment zu generieren erfordert als das Anzugsmoment beim Verschrauben.

17. Fitting **(1)** nach zumindest einem der Ansprüche 1 bis 16, **dadurch gekennzeichnet, dass**
a) die Überwurfmutter **(8)** äusserlich mit einer Schlüsselkontur **(88)** zum Ansetzen eines Schraubwerkzeugs versehen ist, die sich vorzugsweise über den Führungsbereich **(89)** erstreckt; und
b) die Schlüsselkontur **(88)** z.B. aus um den Führungsbereich **(89)** systematisch verteilten, axial orientierten Nuten besteht.

## Claims

1. Fitting (1) for producing a pipe connection, wherein the fitting (1) is designed as a T-piece (11), wherein:
a) the T-piece (11) has a wall (10) and a middle part (20), from which three sockets (21-23) extend;
b) each socket (21-23) is provided with a connection contour (40) for receiving an end (90) of a pipe piece (9);
c) the sockets (21-23) each have a flow passage (101) that is circular in cross section at least in principle, which with its cross-sectional area opens into the flow passage (101) continuing in the middle part (20);
d) within the T-piece (11) at the mouth of the flow passage (101) of the middle third socket (23) into the flow passage (101) of the middle part (20), two wall edges (100) in the form of bomb trajectories inclined towards the vertical are created, which meet with their outgoing branches on two alignment points (29) on the wall (10) of the middle part (20) located opposite each other;
e) for reinforcing the wall edges (100) forming weak points on the T-piece (11) against the pressure loading acting on the middle part (20) during operation, an outer ribbing (5) is provided on each side of the T-piece (11), which consists of:
ea) a centre (50) each, positioned congruently with each alignment point (29);
eb) a first rib (51) each, which extends from each centre (50) facing away from the third socket (23) and the ends of which are directed at each other;
ec) a pair of second ribs (52) each, which extend from each centre (50) to the third socket (23) in a V-shaped manner, wherein the ends of the second ribs (52) of both pairs which are complementary to one another are directed at one another, **characterized in that**
f) the ends of the second ribs (52) of both pairs that are complementary to one another are interconnected through a first bridging (53) running congruently with the respective wall edge (100).

2. Fitting (1) according to Claim 1, **characterized in that** the ends of each pair of second ribs (52) are interconnected through a second bridging (54), as a result of which the two first bridgings (53) and the two second bridgings (54) surround the exit of the third socket (23) from the middle part (20) in a circularly closed manner.

3. Fitting (1) according to at least one of Claims 1 and 2, **characterized in that**
a) the second bridging (54) consists of two webs running parallel spaced from each other with a free space located in between, which extends as far as to the surface of the third socket (23); and
b) the web of the second bridging (54) facing the middle part (20) rises from the surface of the third socket (23) higher than the web facing the third socket (23).

4. Fitting (1) for producing a pipe connection, wherein the fitting (1) is designed as elbow (12, 13), wherein:
a) the elbow (12, 13) has a wall (10) and a middle part (20), from which two sockets (21, 22) extend, which include an interior angle □180° located opposite of which is an exterior angle >180°;
b) each socket (21, 22) is provided with a connection contour (40) for receiving an end (90) of a pipe piece (9);
c) the sockets (21, 22) each have a flow passage (101) which is circular in cross section at least in principle, which with its cross-sectional area opens into the flow passage (101) continuing in the middle part (20), resulting in:
d) a wall edge (100) in the form of a bomb trajectory inclined towards the vertical is created within the elbow (12, 13) at the mouth of the flow passage (101) extending from the first socket (21) into the flow passage (101) extending from the second socket (22), which with its outgoing branches starts at two alignment points (29) on the wall (10) of the middle part (20) located opposite each other;
e) for reinforcing the wall edge (100) forming weak points on the elbow (12, 13) against the pressure loading acting on the middle part (20) during operation, an outer ribbing (5) is provided on each side of the elbow (12, 13), which consists of:
ea) a centre (50) each, congruently positioned with each alignment point (29);
eb) a first rib (51) each, which extends from each centre (50) directed to the exterior angle and the ends of which are directed at each other;
ec) a second rib (52) each, which extends from each centre (50) directed to the interior angle, wherein the ends of the second ribs (52) are directed at one another, **characterized in that**
f) the ends of the second ribs (52) are interconnected through a first bridging (53) running congruently with the wall edge (100).

5. Fitting (1) according to Claim 4, **characterized in that** the elbow (12, 13) is designed with an interior angle of 90° or 135°.

6. Fitting (1) according to at least one of Claims 4 and 5, **characterized in that** with an elbow (13) having a smaller interior angle of for example 90°, the centre (50) rises higher from the surface of the middle part (20) than with an elbow (12) having a larger interior angle, of for example 135°.

7. Fitting (1) according to any one of Claims 1 to 6, **characterized in that** the fitting (1) is formed of plastic as single-layer injection moulding.

8. Fitting (1) according to at least one of Claims 1 to 7, **characterized in that**
a) the centre (50) of the ribbing (5) is cylindrical and encloses a blind hole, which continues as free space as far as to the surface of the middle part (20);
b) the first ribs (51) and second ribs (52) decrease in height with increasing distance from the centre (50) and each have two webs running parallel spaced from one another with a free space located in between, which extends as far as to the surface of the middle part (20); and
c) the first bridging (53) between the two ribs (52) is of tubular design.

9. Fitting (1) according to at least one of Claims 1 to 8, **characterized in that**
a) each socket (21-23) is provided with an external thread (63), which serves for screwing together with an internal thread (82) of a union nut (8);
b)) the end (90) of the pipe piece (9) is provided with a flare (90); and
c) the connection contour (40) is located on the socket outside (21-23).

10. Fitting (1) according to at least one of Claims 1 to 9, **characterized in that**
a) each socket (21-23) has a collar (43) which adjoins the middle part (20); and
b) at the transition from the collar (43) to the middle part (20) raised dogs (44) are systematically distributed, which when tightening the union nut (8) or releasing the latter from the securely tightened state, can be utilised for starting a counter-holding tool.

11. Fitting (1) according to at least one of Claims 1 to 10, **characterized in that** the connection contour (40) for receiving the flare (90) has a circumferential slot (45), which serves for inserting a seal (3) for forming a sealing point with the flare (90).

12. Fitting (1) according to at least one of Claims 1 to 11, **characterized in that**
a) on the socket (21, 23) adjacently to the connection contour (40), a receiving contour (41) is present which adjoins the respective associated collar (43) and serves for positioning a threaded ring (6); and
b) the threaded ring (6) carries the external thread (63) that is complementary to the internal thread (82) of the union nut (8).

13. Fitting (1) according to at least one of Claims 1 to 12, **characterized in that**
a) the threaded ring (6) consists of a first half shell (61) and a second half shell (62), which carry half the external thread (63) each and are intended for joining;
b) the half shells (61, 62) within comprise a mating contour (66), which is capable of fitting the receiving contour (41) on the socket (21-23); and
c) the half shells (61, 62) are preferentially formed of plastic as injection mouldings.

14. Fitting (1) according to at least one of Claims 1 to 13, **characterized in that**
a) the half shells (61, 62) intended for locked joining are provided with engagement elements (65) that are complementary to one another at their ends;
b) the receiving contour (41) on the sockets (21-23) has rings spaced from one another and the mating contour (66) in the half shells (61, 62) has radial grooves which positively interlock with these;
c) the individual engagement clement (65) consists of a lung element and a following depression, which of both half shells (61, 62) mutually engage into one another; and
d) for anti-rotation protection of the threaded ring (6) mounted on the sockets (21-23), first stopper elements (42), e.g. transverse webs are attached in the receiving contour (41), which interact with second stopper elements (67), e.g. transverse grooves formed within the mating contour (66) in the half shells (61, 62).

15. Fitting (1) according to at least one of Claims 1 to 14, **characterized in that**
a) the union nut (8) is divided into a connecting region (80) facing the socket (21-23), with the internal thread (82) arranged therein, and a guiding region (89) facing the pipe piece (9);
b) located in front of the internal thread (82) towards the free end of the connecting region (80), a first profiling (83) is arranged, preferentially in the shape of a circumferential, axially orientated toothing;
c) the half shells (61, 62) of the threaded ring (6) in addition to half the external thread (63) each carry half of a second profiling (64) each, preferentially in the shape of a circumferential, axially orientated toothing, which is intended as carrier for a locking ring (7); and
d) with the union nut (8) completely screwed onto the external thread (63) of the threaded ring (6), the locking ring (7) is held between the profilings (64, 83) for inhibiting loosening of the union nut (8).

16. Fitting (1) according to at least one of Claims 1 to 15, **characterized in that** the locking ring (7):
a) has an inner contour (72), which engages in the second profiling (64) on the threaded ring (6) in a locking manner;
b) has an outer contour (71), which engages in the first profiling (83) on the union nut (8) in an engaging manner; and thus
c) requires generating a greater disconnection torque for disconnecting the screw connection between union nut (8) and threaded ring (6) than is required as tightening torque when screwing together.

17. Fitting (1) according to at least one of Claims 1 to 16, **characterized in that**
a) the union nut (8) is provided on the outside with a spanner contour (88) for starting a spanner, which preferentially extends over the guiding region (89); and
b) the spanner contour (88) for example consists of axially orientated grooves systematically distributed about the guiding region (89).

## Revendications

1. Raccord (1) pour la production d'une jonction de tubes, le raccord (1) étant réalisé sous forme de pièce en T (11),
a) la pièce en T (11) possédant une paroi (10) ainsi qu'une partie centrale (20), depuis laquelle s'étendent trois tubulures (21-23) ;
b) chaque tubulure (21-23) étant pourvue d'un contour de raccordement (40) pour recevoir une extrémité (90) d'un embout tubulaire (9) ;
c) les tubulures (21-23) possédant chacune un passage d'écoulement (101) au moins en principe de section transversale ronde circulaire, lequel passage d'écoulement débouche avec sa surface en section transversale dans le passage d'écoulement (101) se poursuivant dans la partie centrale (20) ;
d) à l'intérieur de la pièce en T (11) au niveau de l'embouchure du passage d'écoulement (101) de la troisième tubulure centrale (23), dans le passage d'écoulement (101) de la partie centrale (20), étant réalisées deux arêtes de paroi (100) de forme parabolique inclinées par rapport à la verticale, qui se rejoignent en forme d'entonnoir avec leurs branches fuyantes au niveau de deux points de fuite (29) opposés sur la paroi (10) de la partie centrale (20) ;
e) pour renforcer les arêtes de paroi (100) formant des points d'affaiblissement au niveau de la pièce en T (11) vis-à-vis des contraintes de pression agissant pendant le fonctionnement sur la partie centrale (20), étant prévu de part et d'autre sur la pièce en T (11) un nervurage extérieur respectif (5) qui se compose :
ea) à chaque fois d'un centre (50) positionné de manière coïncidant avec chaque point de fuite (29) ;
eb) à chaque fois d'une première ailette (51) qui s'étend depuis chaque centre (50) en s'écartant de la troisième tubulure (23) et dont les extrémités sont orientées l'une vers l'autre ;
ec) à chaque fois d'une paire de deuxièmes ailettes (52), qui s'étendent depuis chaque centre (50) en forme de V en direction de la troisième tubulure (23), les extrémités des deuxièmes ailettes mutuellement complémentaires (52) des deux paires étant orientées l'une vers l'autre, **caractérisé en ce que**
f) les extrémités des deuxièmes ailettes mutuellement complémentaires (52) des deux paires sont connectées l'une à l'autre par un premier pont (53) s'étendant de manière coïncidant avec l'arête de paroi respective (100).

2. Raccord (1) selon la revendication 1, **caractérisé en ce que** les extrémités de chaque paire de deuxièmes ailettes (52) sont connectées l'une à l'autre par un deuxième pont (54), de sorte que les deux premiers ponts (53) et les deux deuxièmes ponts (54) entourent le départ de la troisième tubulure (23) de la partie centrale (20) de manière close circulaire.

3. Raccord (1) selon au moins l'une quelconque des revendications précédentes 1 et 2, **caractérisé en ce que**
a) le deuxième pont (54) se compose de deux nervures s'étendant de manière espacée parallèlement l'une de l'autre avec un espace libre entre elles, qui s'étend jusqu'à la surface de la troisième tubulure (23) ; et
b) la nervure du deuxième pont (54) tournée vers la partie centrale (20) se dresse plus haut depuis la surface de la troisième tubulure (23) que la nervure tournée vers la troisième tubulure (23).

4. Raccord (1) pour la production d'une jonction de tubes, le raccord (1) étant réalisé sous forme de pièce angulaire (12, 13),
a) la pièce angulaire (12, 13) possédant une paroi (10) ainsi qu'une partie centrale (20), depuis laquelle s'étendent deux tubulures (21, 22) qui forment un angle intérieur < 180°, opposé à un angle extérieur > 180° ;
b) chaque tubulure (21, 22) étant pourvue d'un contour de raccordement (40) pour recevoir une extrémité (90) d'une pièce tubulaire (9) ;
c) les tubulures (21, 22) possédant chacune un passage d'écoulement (101) au moins en principe de section transversale ronde circulaire, lequel passage d'écoulement débouche avec sa surface en section transversale dans le passage d'écoulement (101) se poursuivant dans la partie centrale (20) ;
d) à l'intérieur de la pièce angulaire (12, 13) au niveau de l'embouchure du passage d'écoulement (101) s'étendant depuis la première tubulure (21) dans le passage d'écoulement (101) s'étendant depuis la deuxième tubulure (22), étant réalisée une arête de paroi (100) de forme parabolique inclinée par rapport à la verticale qui s'applique avec ses branches fuyantes contre deux points de fuite (29) opposés sur la paroi (10) de la partie centrale (20) ;
e) pour renforcer l'arête de paroi (100) formant des points d'affaiblissement au niveau de la pièce angulaire (12, 13) vis-à-vis de la contrainte de pression agissant pendant le fonctionnement sur la partie centrale (20), étant prévu de part et d'autre sur la pièce angulaire (12, 13) un nervurage extérieur respectif (5) qui se compose :
ea) à chaque fois d'un centre (50) positionné de manière coïncidant avec chaque point de fuite (29) ;
eb) à chaque fois d'une première ailette (51) qui s'étend depuis chaque centre (50) en direction de l'angle extérieur et dont les extrémités sont orientées l'une vers l'autre ;
ec) à chaque fois d'une deuxième ailette (52), qui s'étend depuis chaque centre (50) vers l'angle intérieur, les extrémités des deuxièmes ailettes (52) étant orientées l'une vers l'autre, **caractérisé en ce que**
f) les extrémités des deuxièmes ailettes (52) sont connectées l'une à l'autre par un premier pont (53) s'étendant de manière coïncidant avec l'arête de paroi (100).

5. Raccord (1) selon la revendication 4, **caractérisé en ce que** la pièce angulaire (12, 13) est réalisée avec un angle intérieur de 90° ou de 135°.

6. Raccord (1) selon au moins l'une quelconque des revendications 4 et 5, **caractérisé en ce que** pour une pièce angulaire (13) avec un angle intérieur relativement petit, de 90°, par exemple, le centre (50) se dresse plus haut depuis la surface de la partie centrale (20) que dans le cas d'une pièce angulaire (12) ayant un angle intérieur plus grand, par exemple de 135°.

7. Raccord (1) selon au moins l'une quelconque des revendications 1 à 6, **caractérisé en ce que** le raccord (1) est réalisé en plastique ou sous forme de pièce moulée par injection monocouche.

8. Raccord (1) selon au moins l'une quelconque des revendications 1 à 7, **caractérisé en ce que**
a) le centre (50) du nervurage (5) est cylindrique et entoure un trou borgne qui se prolonge sous forme d'espace libre jusqu'à la surface de la partie centrale (20) ;
b) les premières ailettes (51) et les deuxièmes ailettes (52) diminuent de hauteur plus elles s'éloignent du centre (50) et ont à chaque fois deux nervures s'étendant parallèlement à distance l'une de l'autre avec un espace libre entre elles, lequel s'étend jusqu'à la surface de la partie centrale (20) ; et
c) les premiers ponts (53) entre les deuxièmes ailettes (52) sont réalisés sous forme tubulaire.

9. Raccord (1) selon au moins l'une quelconque des revendications 1 à 8, **caractérisé en ce que**
a) chaque tubulure (21-23) est pourvue d'un filetage extérieur (63) qui sert au vissage avec un filetage intérieur (82) d'un écrou d'accouplement (8) ;
b) l'extrémité (90) de la pièce tubulaire (9) est pourvue d'un élargissement (90) ; et
c) le contour de raccordement (40) se trouve à l'extérieur sur la tubulure (21-23).

10. Raccord (1) selon au moins l'une quelconque des revendications 1 à 9, **caractérisé en ce que**
a) chaque tubulure (21-23) présente une bride (43) qui est adjacente à la partie centrale (20) ; et
b) au niveau de la transition de la bride (43) à la partie centrale (20) sont réparties de manière systématique des cames rehaussées (44) qui, lors du serrage de l'écrou d'accouplement (8) ou de son desserrage hors de l'état vissé, peuvent être utilisées pour l'application d'une clé de contre-fixation.

11. Raccord (1) selon au moins l'une quelconque des revendications 1 à 10, **caractérisé en ce que** le contour de raccordement (40) pour recevoir l'élargissement (90) présente une rainure annulaire (45) qui sert à l'insertion d'un joint d'étanchéité (3) pour former une zone d'étanchéité avec l'élargissement (90).

12. Raccord (1) selon au moins l'une quelconque des revendications 1 à 11, **caractérisé en ce que**
a) sur la tubulure (21-23), à côté du contour de raccordement (40), est prévu un contour de réception (41) qui est adjacent à la bride respectivement associée (43) et qui sert au positionnement d'une bague filetée (6) ; et
b) la bague filetée (6) porte le filetage extérieur (63) complémentaire du filetage intérieur (82) de l'écrou d'accouplement (8).

13. Raccord (1) selon au moins l'une quelconque des revendications 1 à 12, **caractérisé en ce que**
a) la bague filetée (6) se compose d'une première demi-coque (61) et d'une deuxième demi-coque (62), qui portent pour moitié le filetage extérieur (63) et qui sont prévues pour être assemblées ;
b) les demi-coques (61, 62) présentent, à l'intérieur, un contour conjugué (66) qui peut être adapté au contour de réception (41) sur les tubulures (21-23) ; et
c) les demi-coques (61, 62) sont réalisées de préférence en plastique sous forme de pièces moulées par injection.

14. Raccord (1) selon au moins l'une quelconque des revendications 1 à 13, **caractérisé en ce que**
a) les demi-coques (61, 62) prévues pour être assemblées par emboîtement sont pourvues à leurs extrémités d'organes d'encliquetage complémentaires les uns des autres (65) ;
b) le contour de réception (41) sur les tubulures (21-23) présente des bagues espacées les unes des autres et le contour conjugué (66) dans les demi-coques (61, 62) présente des rainures radiales à engagement positif avec les bagues ;
c) l'organe d'encliquetage unique (65) se compose d'un élément d'ergot et d'un renfoncement s'y raccordant, qui viennent en prise l'un dans l'autre réciproquement depuis les deux demi-coques (61, 62) ; et
d) pour la fixation en rotation de la bague filetée (6) montée sur les tubulures (21-23), des premiers éléments d'arrêt (42), par exemple des nervures transversales, sont montés dans le contour de réception (41), lesquels premiers éléments d'arrêt coopèrent avec des deuxièmes éléments d'arrêt (67), par exemple des rainures transversales, formés à l'intérieur du contour conjugué (66) dans les demi-coques (61, 62).

15. Raccord (1) selon au moins l'une quelconque des revendications 1 à 14, **caractérisé en ce que**
a) l'écrou d'accouplement (8) se divise en une région de raccordement (80) tournée vers les tubulures (21-23) avec le filetage intérieur (82) disposé dans celle-ci et en une région de guidage (89) tournée vers la pièce tubulaire (9) ;
b) un premier profilage (83) est disposé en avant du filetage intérieur (82) vers l'extrémité libre de la région de raccordement (80), de préférence sous la forme d'une denture périphérique orientée axialement ;
c) les demi-coques (61, 62) de la bague filetée (6) portent, à côté de la moitié de filetage extérieur (63) respective, une deuxième moitié de profilage (64) respective, de préférence sous forme de denture périphérique orientée axialement, qui est prévue en tant que support pour une bague de fixation (7) ; et
d) lorsque l'écrou d'accouplement (8) a été vissé sur le filetage extérieur (63) de la bague filetée (6), la bague de fixation (7) est introduite entre les profilages (64, 83) pour empêcher le desserrage de l'écrou d'accouplement (8).

16. Raccord (1) selon au moins l'une quelconque des revendications 1 à 15, **caractérisé en ce que** la bague de fixation (7) :
a) présente un contour intérieur (72) qui vient en prise par encliquetage dans le deuxième profilage (64) sur la bague filetée (6) ;
b) présente un contour extérieur (71) qui vient en prise par encliquetage dans le premier profilage (83) sur l'écrou d'accouplement (8) ; et
c) donc requiert la génération d'un plus grand couple de desserrage pour desserrer la connexion vissée entre l'écrou d'accouplement (8) et la bague filetée (6) que le couple de serrage lors du vissage.

17. Raccord (1) selon au moins l'une quelconque des revendications 1 à 16, **caractérisé en ce que**
a) l'écrou d'accouplement (8) est pourvu à l'extérieur d'un contour de clé (88) pour l'application d'un outil de vissage, qui s'étend de préférence sur la région de guidage (89) ; et
b) le contour de clé (88) se compose par exemple de rainures orientées axialement réparties systématiquement sur la région de guidage (89).
